(19) Europäisches Patentamt
European Patent Office
Office européen des brevets

(11) **EP 2 466 340 A1**

(12) **EUROPEAN PATENT APPLICATION**

(43) Date of publication:
20.06.2012 Bulletin 2012/25

(51) Int Cl.:
*G02B 1/11* (2006.01)

(21) Application number: 11193225.7

(22) Date of filing: 13.12.2011

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **15.12.2010 JP 2010278919**

(71) Applicant: **Seiko Epson Corporation
Shinjuku-ku
Tokyo (JP)**

(72) Inventors:
• **Nishimoto, Keiji
Nagano, 392-8502 (JP)**
• **Seki, Hiroyuki
Nagano, 392-8502 (JP)**

(74) Representative: **HOFFMANN EITLE
Patent- und Rechtsanwälte
Arabellastraße 4
81925 München (DE)**

(54) **Optical article and method for producing optical article**

(57) An optical article includes an antireflection coating formed on an optical base material either directly or via some other layer. The antireflection coating is configured from alternately laminated n + 1 low-refractive-index layers and n high-refractive-index layers (where n is an integer of 2 or more). At least one of the n high-refractive-index layers is a first-type layer formed by vapor deposition using only a first deposition source that includes zirconium oxide as the main component. The remaining layer(s) in the n high-refractive-index layers is a second-type layer(s) formed by vapor deposition using only a second deposition source that includes titanium oxide as the main component. The n + 1 low-refractive-index layers are third-type layers formed by vapor deposition using only a third deposition source that includes silicon oxide as the main component. The proportion of the total thickness of the second-type layer(s) in the total thickness of the n high-refractive-index layers is from 15% to 90%.

FIG. 3

EP 2 466 340 A1

**Description**

<u>BACKGROUND</u>

1. Technical Field

The present invention relates to optical articles for use in optical materials and products, including lenses such as an eyeglass lens, and to methods for producing such optical articles.

2. Related Art

JP-A-2009-42278 discloses providing an antireflection coating and optical members using the same with which the occurrence of scratches and cracks due to external impact can be suppressed. The antireflection coating includes low-refractive-index layers and high-refractive-index layers alternately laminated from the substrate side in such a manner that the low-refractive-index layers represent the outermost layers. At least one buffer layer of metal oxide is provided between the low-refractive-index layers and the high-refractive-index layers. The low-refractive-index layers are formed of at least one metal oxide selected from $SiO_2$ and $Al_2O_3$. The high-refractive-index layers are formed of at least one metal oxide selected from $Ta_2O_5$, $Nb_2O_5$, and $ZrO_2$. The buffer layer is formed of at least one metal oxide selected from InSnO, InZnO, $In_2O_3$, and $TiO_2$.

The antireflection coating formed on an optical base material is required to have a wide range of functions other than antireflection performance, including scratch resistance and heat resistance (durability). For this reason, it has been proposed to form one of the high-refractive-index layers as a mixed layer of different components, or to form the high-refractive-index layers as a mixed system of main high-refractive-index layer components such as zirconium dioxide, titanium dioxide, tantalum pentoxide, and yttrium trioxide, as described in JP-A-2009-42278. However, regardless of the configuration, the producing method is complex, because the deposition of the antireflection coating requires varying the vapor deposition components within a single layer, or providing three, four, or even more main components of different properties to form the high-refractive-index layer. This is disadvantageous in terms of economy, and makes it difficult to ensure yield in forming the antireflection coating.

Further, the complexity of the performance and functions required for the antireflection coating has been higher in response to the recent demand for matching the antireflection coating with the underlying hardcoat layer. Such demands have created a trend for even more complex antireflection coating configurations.

<u>SUMMARY</u>

An aspect of the invention is directed to an optical article that includes an antireflection coating formed on an optical base material either directly or via some other layer. The antireflection coating is configured from alternately laminated n + 1 low-refractive-index layers and n high-refractive-index layers (where n is an integer of 2 or more). More specifically, the low-refractive-index layers and the high-refractive-index layers are alternately laminated from the optical base material side in such a manner that the low-refractive-index layers represent the outermost layers.

In the antireflection coating, at least one of the n high-refractive-index layers is a first-type layer formed by vapor deposition using only a first deposition source that includes zirconium oxide as the main component. The remaining high-refractive-index layer(s) is a second-type layer(s) formed by vapor deposition using only a second deposition source that includes titanium oxide as the main component. The n + 1 low-refractive-index layers are third-type layers formed by vapor deposition using only a third deposition source that includes silicon oxide as the main component. The proportion P of the sum of the thicknesses of the second-type layer(s) (hereinafter, also referred to as the sum of the thickness(es) T2T of the second-type layer(s)) with respect to the sum of the thicknesses of the n high-refractive-index layers (hereinafter, also referred to as the sum of the thickness(es) TT of the high-refractive-index layers) is such that the proportion P (the proportion of the second-type layer (s) sum of the thickness(es) in the total thickness of the high-refractive-index layers; P = T2T/TT) falls in the following range.

$$15\% \leq P \leq 90\% \qquad (1)$$

The antireflection coating is configured from the first-type layer, the second-type layer, and the third-type layer formed by vapor deposition using only the first deposition source, the second deposition source, and the third deposition source, respectively, and does not include high-refractive-index layers of a combined type, a mixed type, or of any such complex systems where the deposition source is changed during the vapor deposition of a single high-refractive-index layer. The present inventors found that the antireflection coating, despite its simple configuration as a simple laminate of the high-refractive-index layers of two single compositions and the low-refractive-index layers of a single composition, can exhibit high levels of performance (various characteristics) required for the antireflection coating, including antireflectivity, scratch resistance, heat resistance, water resistance, and resistance to ultraviolet-induced deterioration, when the thicknesses of the high-refractive-index layers of two single compositions are controlled within the foregoing range. The present inventors also found that the antireflection coating can have an antistatic function, and that the antireflection coating can function to suppress the deterioration and discoloration of a titanium dioxide (titania)-containing functional layer, for example, such as a hardcoat layer, and the decomposition of the organic binder, when such layers are provided underneath the antireflection coating.

The antireflection coating can thus be used to provide an optical article that has various functions or high levels of various functions, without the need for a complex system of high-refractive-index layers, without making the individual high-refractive-index layers complex. It is therefore possible to provide a high-quality optical article at even lower cost and at high yield.

It has been confirmed that, being below the lower limit of equation (1), there is a decline in some of the performance that originates in the second-type high-refractive-index layer formed by using the second deposition source, and that, being above the upper limit of equation (1), some of the performance that originates in the first-type high-refractive-index layer formed by using the first deposition source declines.

It is further preferable in the optical article that the proportion P fall in the following range.

$$20\% \leq P \leq 60\% \qquad (2)$$

By satisfying the condition of equation (2), the optical article can have even higher levels of performance, including water resistance and antireflectivity.

It is also preferable in the optical article that the total thickness of the second-type layer(s) (second-type layer(s) sum of the thickness(es) T2T) be from 15 nm to 45 nm.

Further, it is preferable in the optical article that at least one of the second-type layers be a layer subjected to a surface conduction treatment after being formed by vapor deposition. Here, the surface conduction treatment typically refers to a treatment that lowers the surface electrical resistance. In one example of the conduction treatment, the surface of the second-type layer is bombarded with an ionized mixed gas of argon gas and oxygen gas. In this way, antistatic performance and/or electromagnetic shielding performance can be provided without having the need to use other deposition sources in combination. When more than one second-type layer is present, the surface conduction treatment may be performed for all of the second-type layers, or for only one of the second-type layers. For example, the surface conduction treatment may be performed for only the second-type layer closest to the optical base material.

It is preferable in the optical article that n be 2, 3, or 4; specifically, the antireflection coating preferably has a 5-layer, 7-layer, or 9-layer structure. In this way, sufficient antireflection characteristics can be obtained for the production cost of the antireflection coating.

The optical article may further include an antifouling layer formed on the antireflection coating either directly or via some other layer. The optical base material is typically a plastic lens base material. One form of the optical article is a spectacle lens. Another form of the invention is eyeglasses that include a spectacle lens and a frame to which the spectacle lens is attached.

According to another aspect of the invention, there is provided a method for producing an optical article that includes an antireflection coating formed on an optical base material either directly or via some other layer. Here, the antireflection coating is configured from alternately laminated n + 1 low-refractive-index layers and n high-refractive-index layers (where n is an integer of 2 or more). At least one of the high-refractive-index layers is a first-type layer that contains zirconium oxide as the main component, whereas the other high-refractive-index layer(s) are second-type layers that contain titanium oxide as the main component. The low-refractive-index layers are third-type layers that contain silicon oxide as the main component. The proportion P of the sum of the thicknesses of the second-type layer(s) with respect to the sum of the thicknesses of the high-refractive-index layers is from 15% to 90%.

The optical article producing method includes:

(a) forming a first-type layer by vapor deposition using only a first deposition source that includes zirconium oxide as the main component; and

(b) forming a second-type layer by vapor deposition using only a second deposition source that includes titanium oxide as the main component.

In this way, an antireflection coating can be deposited that has high levels of performance (various characteristics) required for the antireflection coating, including antireflectivity, scratch resistance, heat resistance, water resistance, and resistance to ultraviolet-induced deterioration, without having the need to use a complicated producing method that changes the deposition source during the vapor deposition of a single high-refractive-index layer.

It is preferable that the method further include performing a conduction treatment for a surface of at least one of the second-type layers.

BRIEF DESCRIPTION OF THE DRAWINGS

The invention will be described with reference to the accompanying drawings, wherein like numbers reference like elements.

FIG. 1 is a cross sectional view illustrating a structure of a lens that includes an antireflection coating of a 7-layer structure.

FIG. 2 is a flowchart representing production of the antireflection coating.

FIG. 3 is a diagram schematically illustrating an example of a vapor deposition apparatus used to produce the antireflection coating.

FIG. 4 is a diagram presenting the layer structures of samples of Examples 1 to 5 provided with an antireflection coating of a 7-layer structure.

FIG. 5 is a diagram presenting the layer structures of samples of Comparative Examples 1 to 3 provided with an antireflection coating of a 7-layer structure.

FIG. 6 is a diagram presenting the deposition conditions of an $SiO_2$ layer, a $ZrO_2$ layer, and a $TiO_2$ layer included in the antireflection coating.

FIGS. 7A to 7C are diagrams schematically representing a conduction treatment performed for a $TiO_2$ layer surface; FIG. 7A represents the state in which the $TiO_2$ layer is deposited on an $SiO_2$ layer, FIG. 7B represents the state in which ion beams are shone on the $TiO_2$ layer surface, and FIG. 7C represents the state in which an $SiO_2$ layer is deposited on the $TiO_2$ layer subjected to the surface conduction treatment.

FIG. 8 is a cross sectional view illustrating a structure of a lens that includes an antireflection coating of a 5-layer structure.

FIG. 9 is a diagram presenting the layer structures of samples of Examples 6 and 7 and Comparative Examples 4 and 5 provided with an antireflection coating of a 5-layer structure.

FIG. 10 is a cross sectional view illustrating a structure of a lens that includes an antireflection coating of a 9-layer structure.

FIG. 11 is a diagram presenting the layer structures of samples of Examples 8 and 9 and Comparative Examples 6 and 7 provided with an antireflection coating of a 9-layer structure.

FIGS. 12A and 12B are diagrams representing the optical constants of an $SiO_2$ layer, a $ZrO_2$ layer, and a $TiO_2$ layer; FIG. 12A represents the relationship between wavelength and refractive index, and FIG. 12B represents the relationship between wavelength and extinction coefficient.

FIG. 13 is a diagram presenting the measured bayer values and the bayer ratios of samples of Examples 1 to 5 and Comparative Examples 1 to 3.

FIG. 14 is a diagram representing the relationship between the bayer ratio and the proportion of the $TiO_2$ layer sum of thickness(es) in the sum of the thickness(es) of high-refractive-index layers in samples of Examples 1 to 5 and Comparative Examples 1 to 3.

FIG. 15 is a diagram representing the relationship between the bayer ratio and the sum of the thickness (es) of $TiO_2$ layers in samples of Examples 1 to 5 and Comparative Examples 1 to 3.

FIG. 16 is a diagram presenting various measurement results for samples of Examples 1 to 5 and Comparative Examples 1 to 3 provided with an antireflection coating of a 7-layer structure.

FIG. 17 is a diagram presenting various measurement results for samples of Examples 6 and 7 and Comparative Examples 4 and 5 provided with an antireflection coating of a 5-layer structure.

FIG. 18 is a diagram presenting various measurement results for samples of Examples 8 and 9 and Comparative Examples 6 and 7 provided with an antireflection coating of a 9-layer structure.

FIG. 19 is a diagram representing the measured transmittance against wavelength in samples of Examples 1 to 9 and Comparative Examples 1 to 7.

FIG. 20 is a diagram representing the measured reflectance against wavelength in samples of Examples 1 to 9 and Comparative Examples 1 to 7.

FIG. 21 is a diagram presenting the stresses of an $SiO_2$ layer, a $ZrO_2$ layer, and a $TiO_2$ layer.

FIG. 22 is a diagram representing the relationship between wavelength and transmittance for a quartz substrate and for a hardcoat layer formed on a quartz substrate.

FIG. 23 is a diagram presenting the colors of oxygen loss-type rutile $TiO_2$ samples having different O/Ti values.

FIG. 24 is a diagram schematically illustrating an example of eyeglasses.

DESCRIPTION OF EXEMPLARY EMBODIMENTS

The following describes an eyeglass lens as an example of the optical article. It should be noted, however, that the optical article to which the invention is applicable is not limited to this.

1. First Embodiment

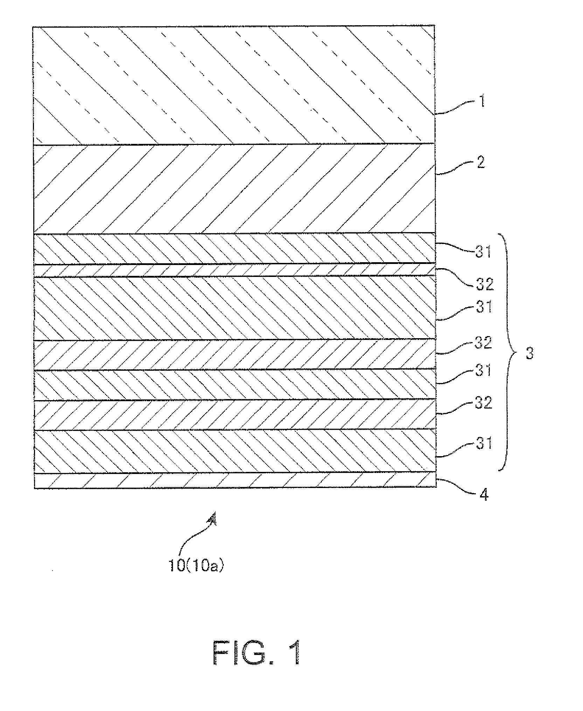

FIG. 1 shows a cross sectional configuration of a lens of First Embodiment of the invention on one side of the lens relative to the base material at the center. FIG. 1 represents the laminated layers on the lower side of the base material 1 at the center. Accordingly, in the following, the layers laminated on the outer sides (upper side and lower side) will be described as upper layers. A lens (optical article) 10 (10a) includes a lens base material (optical base material) 1, a hardcoat layer 2 formed on a surface of the lens base material 1, a translucent, multilayer antireflection coating 3 formed on the hardcoat layer 2, and an antifouling layer 4 formed on the antireflection coating 3. In the following, the lens will be collectively (commonly) referred to as lens 10, and the lens of First Embodiment as lens 10a.

1.1 Lens Base Material

The lens base material 1 is not particularly limited, and may be (meth)acrylic resin. Other examples include allyl carbonate resin such as styrene resin, polycarbonate resin, allyl resin, and diethylene glycol bis(allyl carbonate) resin (CR-39); urethane resin obtained by the reaction of vinyl resin, polyester resin, polyether resin, or an isocyanate compound with a hydroxy compound such as diethylene glycol; thiourethane resin as the product of a reaction between an isocyanate compound and a polythiol compound; and transparent resin obtained by curing a polymerizable composition that contains a (thio)epoxy compound having one or more disulfide bonds within the molecule. The refractive index of the lens base material 1 is, for example, about 1.60 to 1.75. The refractive index of the lens base material 1 is not limited to this, and may be above or below this range.

1.2 Hardcoat Layer (Primer Layer)

The hardcoat layer 2 formed on the lens base material 1 is provided to impart scratch resistance (abrasion resistance) to the lens 10 (lens base material 1), or to increase the durability (strength) of the lens 10 (lens base material 1). Examples of the material usable for the hardcoat layer 2 include acrylic resin, melamine resin, urethane resin, epoxy resin, polyvinyl acetal resin, amino resin, polyester resin, polyamide resin, vinyl alcohol resin, styrene resin, silicon resin, and mixtures or copolymers of these.

For example, the hardcoat layer 2 is silicon resin. The hardcoat layer 2 can be formed by, for example, applying and curing a coating composition that contains metal oxide fine particles, and a silane compound. The coating composition may also include components such as colloidal silica, and a polyfunctional epoxy compound.

Specific examples of the metal oxide fine particles contained in the coating composition include fine particles of metal oxides such as $SiO_2$, $Al_2O_3$, $SnO_2$, $Sb_2O_5$, $Ta_2O_5$, $CeO_2$, $La_2O_3$, $Fe_2O_3$, $WO_3$, $ZrO_2$, $In_2O_3$, and $TiO_2$, and composite fine particles of metal oxides of two or more metals. A colloidal dispersion of such fine particles in a dispersion medium (for example, water, alcohol, and other organic solvents) may be mixed with the coating composition.

In this embodiment, silica and titania sol are used as the metal oxide, and these are solidified with resin to form the hardcoat layer 2. The hardcoat layer 2 has a thickness of 1,000 nm to 3,000 nm. However, the thickness of the hardcoat layer 2 is not limited to this, and may be above or below this range.

A primer layer may be provided between the lens base material 1 and the hardcoat layer 2 to ensure adhesion between the lens base material 1 and the hardcoat layer 2. The primer layer is also effective at improving the impact resistance, a drawback of high-refractive-index lens base material. Examples of the material used for the primer layer (resin used to form the base of the primer layer) include acrylic resin, melamine resin, urethane resin, epoxy resin, polyvinyl acetal resin, amino resin, polyester resin, polyamide resin, vinyl alcohol resin, styrene resin, silicon resin, and mixtures or copolymers of these. Urethane resin and polyester resin are preferable as the primer layer used to provide adhesion.

Typically, the hardcoat layer 2 and the primer layer can be formed by applying a coating composition using a dipping method, a spinner method, a spray method, or a flow method, followed by heating and drying at a temperature of 40 to 200°C for several hours.

1.3 Antireflection Coating

The antireflection coating 3 formed on the hardcoat layer 2 of the lens 10 is an inorganic antireflection coating. The inorganic antireflection coating 3 is a multilayer that includes n+1 low-refractive-index layers 31 and n high-refractive-index layers 32, where n is an integer of 2 or more. The low-refractive-index layers 31 and the high-refractive-index layers 32 are alternately laminated. The low-refractive-index layers 31 have a refractive index of, for example, 1.3 to 1.6. The high-refractive-index layers 32 have a refractive index of, for example, 1.8 to 2.6. Considering the production cost and antireflection performance, n is typically 2, 3, or 4. Specifically, the antireflection coating 3 may be configured to include a total of 5, 7, or 9 layers. In the present embodiment, the antireflection coating 3 has a 7-layer structure (n = 3) with four low-refractive-index layers 31 and three high-refractive-index layers 32. The low-refractive-index layers 31 and the high-refractive-index layers 32 are alternately laminated from the substrate side in such a manner that the low-refractive-index layers 31 represent the outermost layers.

In this embodiment, the low-refractive-index layers 31 are third-type layers that contain silicon oxide ($SiO_2$) as the main component. At least one of the high-refractive-index layers 32 is a first-type layer that contains zirconium oxide ($ZrO_2$) as the main component, while the other high-refractive-index layers 32 are second-type layers that contain titanium oxide ($TiO_x$ ($0 < x \leq 2$), hereinafter also referred to simply as $TiO_2$ for convenience) as the main component. The third-type layers representing the low-refractive-index layers 31 are formed by vapor deposition using a third deposition source that includes silicon oxide ($SiO_2$) as the main component. The first-type layer representing at least one of the high-refractive-index layers 32 is formed by vapor deposition using a first deposition source that includes zirconium oxide ($ZrO_2$) as the main component. The second-type layer representing at least one of the high-refractive-index layers 32 is formed by vapor deposition using a second deposition source that includes titanium oxide ($TiO_x$) as the main component.

The proportion P of the thickness of the second-type layer(s), or the proportion P of the sum of the thickness (es) of the second-type layer(s) (hereinafter, also referred to as the sum of thickness(es) T2T of the second-type layers (s)) with respect to the sum of the thickness(es) of the high-refractive-index layers 32 (hereinafter, also referred to as sum of the thickness(es) TT of the high-refractive-index layers 32) falls within the following range.

$$15\% \leq P \leq 90\% \quad (1)$$

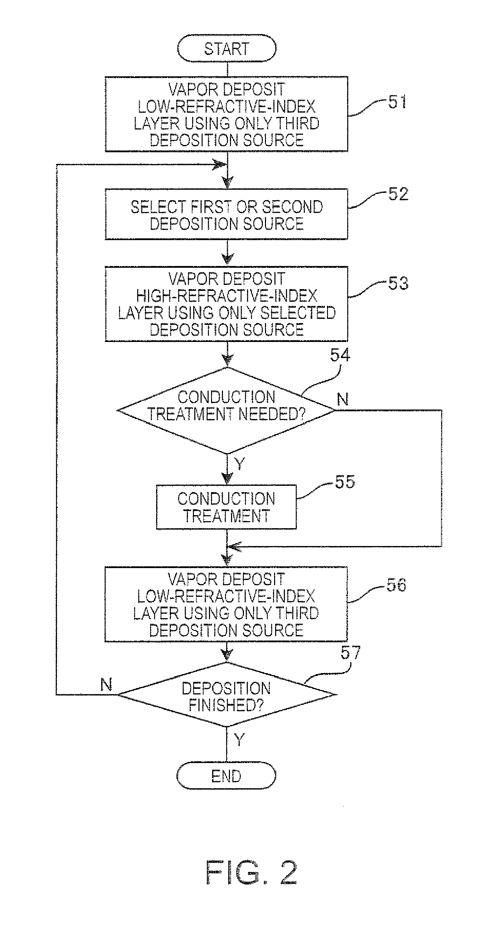

FIG. 2 represents a flowchart outlining the method of forming the antireflection coating 3 (producing method). The antireflection coating 3 is formed by the repeated vapor deposition of necessary numbers of the low-refractive-index layers 31 and the high-refractive-index layers 32. The vapor deposition used herein includes drying methods, for example, such as a vacuum vapor deposition method, an ion plating method, and a sputtering method. The vacuum vapor deposition method may employ an ion beam-assisted method that involves simultaneous ion beam irradiation during the vapor deposition.

First, in step 51, the low-refractive-index layer (first layer) 31 is formed using only the third deposition source. Then, in step 52, the first deposition source or second deposition source is selected, and the high-refractive-index layer (second layer) 32 is formed in step 53 using only the first deposition source or second deposition source selected. If it is determined in step 54 that the surface of the high-refractive-index layer 32 vapor deposited as above needs to be made conductive, a conduction treatment is performed in step 55. In step 56, the low-refractive-index layer (third layer) 31 is formed again using the third deposition source. In step 57, it is determined whether predetermined numbers of high-refractive-index layers 32 and low-refractive-index layers 31 have been formed. If NO in step 57, the sequence returns to step 52, and the high-refractive-index layer 32 and the low-refractive-index layer 31 are vapor deposited until predetermined numbers of layers are formed.

As above, in this producing method, the low-refractive-index layers 31 and the high-refractive-index layers 32 of the antireflection coating 3 are formed using only the selected deposition sources, instead of forming the high-refractive-index layer 32 by simultaneously using or continuously switching a plurality of deposition sources intended for different purposes or including different main components, or instead of providing a layer of different composition or different name serving essentially as the low-refractive-index layer or high-refractive-index layer between the low-refractive-index layer 31 and the high-refractive-index layer 32.

1.3.1 Conduction Treatment

Conduction treatment is performed to impart antistatic performance and/or electromagnetic shielding performance to one or more of the high-refractive-index layers 32. In the method of producing the antireflection coating 3, a mixed gas of argon gas and oxygen gas is ionized and bombarded on the surface of the second-type layer, specifically on the surface of the high-refractive-index layer that contains titanium oxide ($TiO_x$) as the main component. One possible reason that conduction is achieved by this treatment is the separation or leaving of the oxygen atoms in some of the titanium oxides on the surface of the second-type layer, making the stoichiometric ratio of the metal and oxygen atoms out of proportion from the composition of the predetermined compound (creating a nonstoichiometric composition). This is believed to create oxygen defects (oxygen losses) in the surface region of the second-type layer, the oxygen losses serving as carriers to develop conductivity (lower the surface electrical resistance (sheet resistance)).

Further, because the argon remains in the localized state in the surface layer region of the second-type layer, recombinations of oxygen losses can be suppressed, or localized levels are formed. There accordingly will be only a small decrease in conductivity with time, if any. The antireflection coating 3 with the second-type layer after the conduction treatment has antistatic performance and/or electromagnetic shielding performance that remain for extended time periods. Further, the oxygen loss region by the conduction treatment is confined only in the surface region, and thus has only small influence on the optical performance of the antireflection coating 3.

Note that experiments conducted by the present inventors have confirmed that the ionization and bombardment of carbon dioxide gas ($CO_2$ gas) on the surface of the second-type layer (carbon dioxide gas ion beam irradiation), or silicon injection by ion-assisted vapor deposition also can lower the surface electrical resistance of the second-type layer and can thus be used for the conduction treatment.

1.4 Antifouling Layer

A water-repellent film or a hydrophilic anti-fog film (antifouling layer, anti-contamination layer) 4 is often formed on the antireflection coating 3 of the spectacle lens 10. For example, the antifouling layer 4 is formed as a layer of a fluorine-containing organosilicon compound on the antireflection coating 3 to improve the water-repellency and oil-repellency of the surface of the optical article (lens) 10. Preferred examples of the fluorine-containing organosilicon compound include fluorine-containing silane compounds.

Preferably, the fluorine-containing silane compound is dissolved in an organic solvent, and used as a water-repellent treatment liquid adjusted to a predetermined concentration (antifouling layer-forming coating composition). The antifouling layer 4 can be formed by applying the water-repellent treatment liquid (antifouling layer-forming coating composition) on the antireflection coating. The method of application may be, for example, a dipping method, or a spin coating method. The antifouling layer also may be formed by a dry method such as a vacuum vapor deposition method, using the water-repellent treatment liquid (antifouling layer-forming coating composition) charged into a metal pellet.

The thickness of the antifouling layer 4 having water- and oil-repellency is not particularly limited, and is preferably from 0.001 to 0.5 $\mu$m, more preferably from 0.001 to 0.03 $\mu$m. It is not preferable to make the thickness of the antifouling layer 4 too thin, because it diminishes the water-repelling and oil-repelling effect, or to make it too thick as it makes the surface tacky. A thickness of the antifouling layer 4 above 0.03 $\mu$m may lower the antireflection effect.

2. Examples of First Embodiment (Antireflection Coating: 7-Layer Structure)

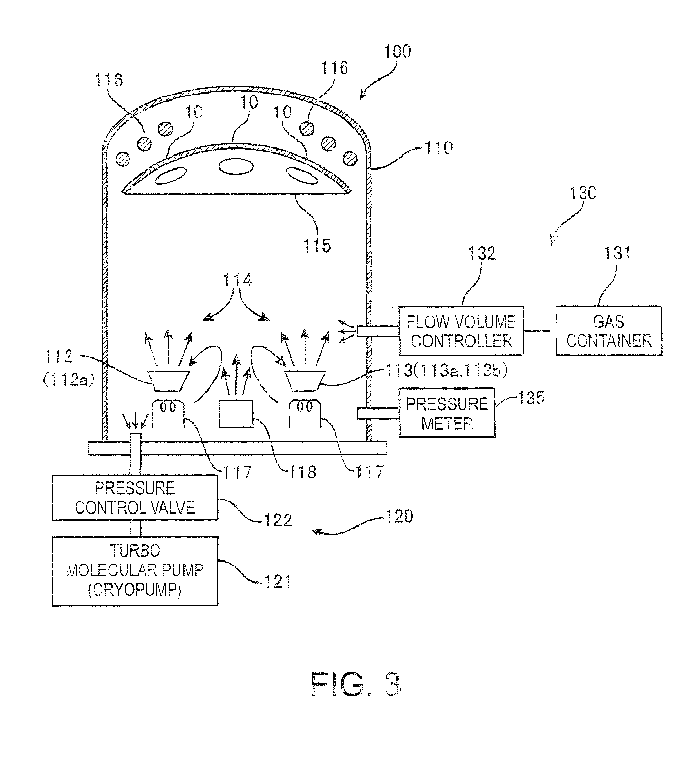

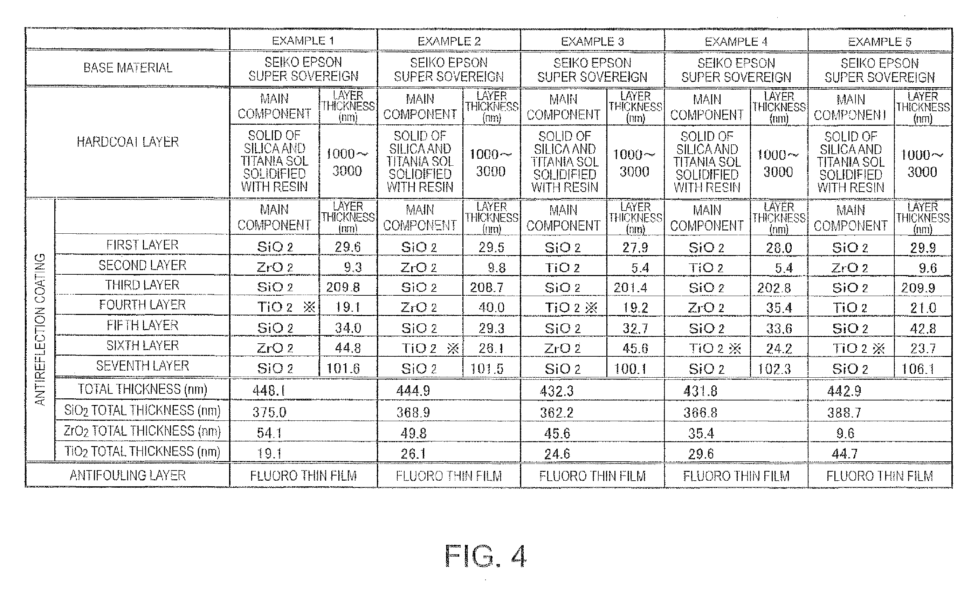

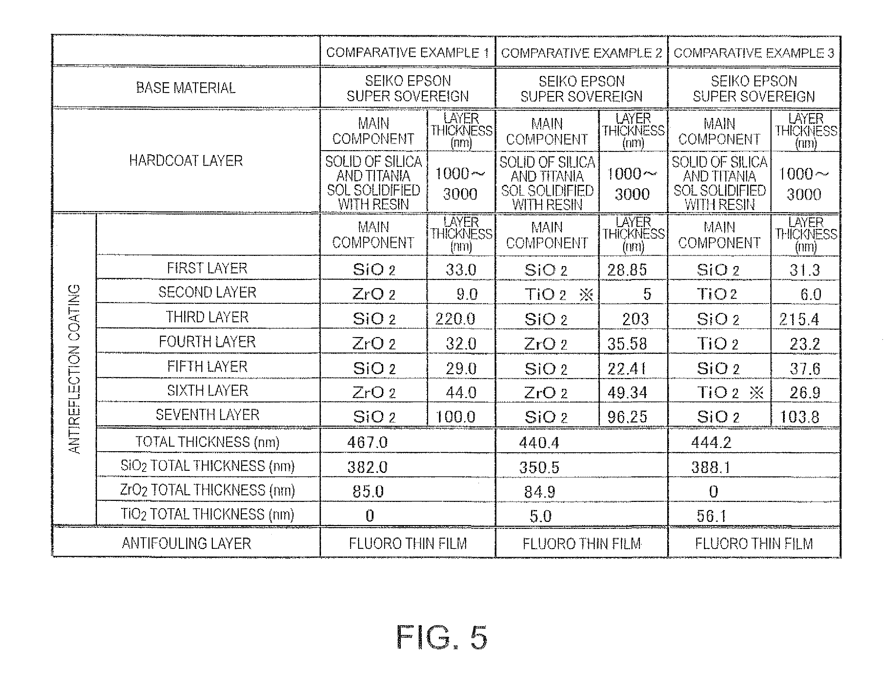

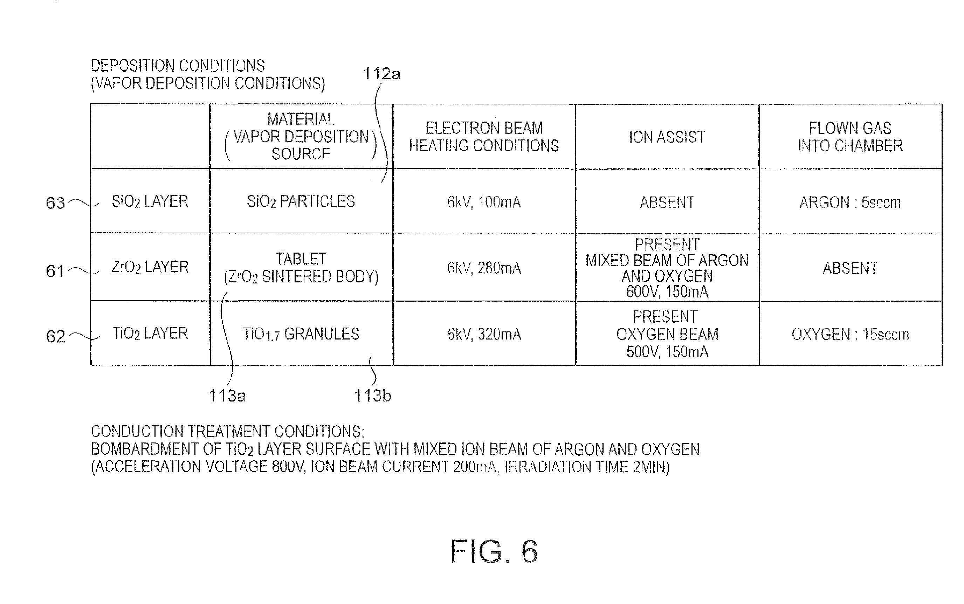

Samples (Examples 1 to 5, Comparative Examples 1 to 3) were produced for the lens 10a that includes an antireflection coating 3 of a total of seven layers. FIG. 3 schematically illustrates an example of a vapor deposition apparatus used to produce the samples of Examples and Comparative Examples. FIG. 4 and FIG. 5 summarize the layer structures of the samples of Examples and Comparative Examples produced for the 7-layer antireflection coating 3. FIG. 6 summarizes the deposition conditions of the low-refractive-index layer ($SiO_2$ layer, third-type layer) 63, the first-type high-refractive-index layer (first-type layer, $ZrO_2$ layer) 61, and the second-type high-refractive-index layer (second-type layer, $TiO_2$ layer) 62 included in the antireflection coating 3.

2.1 Example 1 (Sample S1)

2.1.1 Selection of Lens Base Material and Deposition of Hardcoat Layer

An eyeglass plastic lens base material (refractive index 1.67; Seiko Super Sovereign (SSV) ; Seiko Epson) was used as the lens base material 1.

The application liquid (coating liquid) for forming the hardcoat layer 2 was prepared as follows. 4.46 parts by weight of an acid anhydride hardener (hardener liquid (C2); Arakawa Chemical Industries, Ltd.) was added to 20 parts by weight of an epoxy resin-silica hybrid (Compoceran E102; Arakawa Chemical Industries, Ltd.), and the mixture was stirred to obtain the application liquid (coating liquid, coating solution). The coating solution was then applied on the lens base material 1 in a predetermined thickness using a spin coater. The lens base material 1 with the coating was calcined at 125°C for 2 hours to deposit the hardcoat layer 2 of a type that included silica and titania sol solidified with resin. The hardcoat layer 2 had a thickness of 1,000 nm to 3,000 nm.

2.1.2 Deposition of Antireflection Coating

The antireflection coating 3 for the lens sample S1 of Example 1 was deposited. In the following, the sample of each Example will be referred to as sample S1 ("sample" and alphabet "S" and Example number), and the term "sample 10a" will be used to collectively (commonly) refer to the samples of Examples of First Embodiment. Further, "sample 10" will be used as a general term for the samples of the all embodiments. The antireflection coating 3 was formed using a vacuum vapor deposition method, as follows.

2.1.2.1 Vapor Deposition Apparatus

A vapor deposition apparatus 100 illustrated in FIG. 3 can perform the steps of FIG. 2 to continuously deposit (produce) the inorganic, multilayer antireflection coating 3. The vapor deposition apparatus 100 also can perform the conduction treatment of step 55, continuously with the vapor deposition of the layers. The vapor deposition apparatus 100 is an electron beam vapor deposition apparatus, and includes a vacuum vessel 110, an evacuator 120, and a gas supply unit 130. The vacuum vessel 110 includes a sample support 115 used to place the lens sample 10 with the hardcoat layer 2 formed (deposited) thereon, a base material-heating heater 116 used to heat the lens sample 10 set on the sample support 115, and filaments 117 that generate thermoelectrons. The base material-heating heater 116 is provided as, for example, an infrared lamp, and heats the lens sample 10 to remove gas or moisture, and thus ensures adhesion for the layer formed on the surface of the lens sample 10.

The vapor deposition apparatus 100 also includes a container 112 that stores a third deposition source 112a used to form the third-type layer 63 of the low-refractive-index layers 31, and a container 113 that contains a first deposition source 113a and a second deposition source 113b used to form the first-type layer 61 and the second-type layer 62, respectively, of the high-refractive-index layers 32. Specifically, the container 112 is equipped with a crucible (not illustrated) for the third deposition source 112a, and the container 113 is equipped with two crucibles (not illustrated): one for the first deposition source 113a used to form the first-type layer, and one for the second deposition source 113b used to form the second-type layer.

An electron gun (not illustrated) bombards thermoelectrons 114 to any of the deposition sources (metal oxides) set in the crucibles, causing the material to evaporate and to continuously deposit and form layers on the lens sample 10. In this example, $SiO_2$ particles are used as the third deposition source 112a, a $ZrO_2$ sintered body (tablet) as the first deposition source 113a, and $TiO_{1.7}$ granules as the second deposition source 113b (see FIG. 6). The second-type layer 62 is formed by the vapor deposition of the deposition source $TiO_{1.7}$, using an oxygen beam. As such, a nonstoichiometric substance $TiO_x$ ($0 < x \leq 2$) may also be contained, in addition to $TiO_2$.

The vapor deposition apparatus 100 also includes an ion gun 118 for ion-assisted vapor deposition. For this purpose, the ion gun 118 ionizes and accelerates the gas flown into the vacuum vessel 110 for bombardment onto the lens sample 10. The vacuum vessel 110 may be provided with devices such as a cold trap used to remove the remaining moisture, and a device used to control the thickness. Examples of thickness control device include a reflection-type optical thickness meter, and a crystal oscillator thickness meter.

Inside the vacuum vessel 110 may be maintained at a high vacuum, for example, $1 \times 10^{-4}$ Pa, using a turbo molecular pump or a cryopump 121, and a pressure control valve 122 provided in the evacuator 120. A predetermined gas atmosphere also may be created inside the vacuum vessel 110 using the gas supply unit 130. For example, the gas supply unit 130 includes a gas container 131 ready to supply gases such as argon (Ar), nitrogen ($N_2$), and oxygen ($O_2$). The gas flow volume can be controlled using a flow volume controller 132. The pressure inside the vacuum vessel 110 can be controlled using a pressure meter 135.

The vapor deposition conditions of the vapor deposition apparatus 100 basically include vapor deposition material, the acceleration voltage and the current value of the electron gun, and the presence or absence of ion assistance. The conditions for ion assistance depend on the type of ions (atmosphere of the vacuum vessel 110), and the acceleration voltage and ion current values of the ion gun 118. In the following, the acceleration voltage and the current value of the electron gun are selected from the 5 to 10 kV range and the 50 to 500 mA range, respectively, according to such factors as the deposition rate, unless otherwise specified. When using ion assistance, the voltage value and the current value of the ion gun 118 are selected from the 200 V to 1 kV range and the 100 to 500 mA range, respectively, according to such factors as the deposition rate.

2.1.2.2 Pretreatment

The lens sample 10 with the hardcoat layer 2 was washed with acetone. The moisture attached to the lens sample 10 was evaporated by a heat treatment performed at about 70°C inside the vacuum vessel 110. This was followed by the ion cleaning of the surface of the lens sample 10. Specifically, an oxygen ion beam was shone on the surface of the lens sample 10 at a several hundred electronvolt energy using the ion gun 118 to remove the organic material adhered on the surface of the lens sample 10. This treatment (method) can also improve the adhesion of the layer (film) formed on the surface of the lens sample 10. The same treatment may be performed using inert gas, for example, such as argon (Ar) gas and xenon (Xe) gas, or using nitrogen ($N_2$), instead of oxygen ions. Irradiation of oxygen radicals or oxygen plasma is also possible.

2.1.2.3 Formation of Low-Refractive-Index Layers and High-Refractive-Index Layers

After the thorough vacuum evacuation of the vacuum vessel 110, the low-refractive-index layers 31 and the high-refractive-index layers 32 were alternately laminated to produce the antireflection coating 3, using an electron beam vacuum vapor deposition method. In the lens sample S1 of Example 1, silicon oxide ($SiO_2$) layers 63 were formed as the first layer, the third layer, the fifth layer, and the seventh layer of the low-refractive-index layers 31, using the third deposition source 112a. Further, zirconium oxide ($zrO_2$) layers 61 were formed as the second layer and the sixth layer of the high-refractive-index layers 32 using the first deposition source 113a, and a titanium oxide ($TiO_2$) layer 62 was formed as the fourth layer of the high-refractive-index layers 32 using the second deposition source 113b (see FIG. 4).

As represented in FIG. 6, the $SiO_2$ layers 63 were formed using $SiO_2$ particles as the third deposition source 112a, without ion assist. Specifically, the electron beam heating conditions included 6-kV voltage and 100-mA current. Here, argon gas was flown into the vacuum vessel (chamber) 110 at 5 sccm. The first, third, fifth, and seventh layers were controlled to have thicknesses (layer thicknesses) of 29.6 nm, 209.8 nm, 34.0 nm, and 101.6 nm, respectively.

The $ZrO_2$ layers 61 were formed using a tablet-like $ZrO_2$ sintered body as the first deposition source 113a, with ion assist (ion-assisted vapor deposition). Specifically, the electron beam heating conditions included 6-kV voltage and 280-mA current. Here, a mixed beam of argon and oxygen was shone for ion assist using a mixed gas of argon gas and oxygen gas, at an ion acceleration voltage of 600V, and an ion beam current of 150 mA. No gas was flown into the vacuum vessel (chamber) 110. The second and sixth layers were controlled to have thicknesses (layer thicknesses) of 9.3 nm and 44.8 nm, respectively.

The $TiO_2$ layer 62 was formed using $TiO_{1.7}$ granules as the second deposition source 113b, with ion assist (ion-assisted vapor deposition). Specifically, the electron beam heating conditions included 6-kV voltage and 320-mA current. Here, an oxygen beam was shone for ion assist using oxygen gas, at an ion acceleration voltage of 500 V and an ion beam current of 150 mA. The ion-assisted vapor deposition was performed while flowing oxygen gas into the vacuum vessel (chamber) 110 at 15 sccm. The fourth layer was controlled to have a thickness (layer thickness) of 19.1 nm.

2.1.2.4 Conduction Treatment

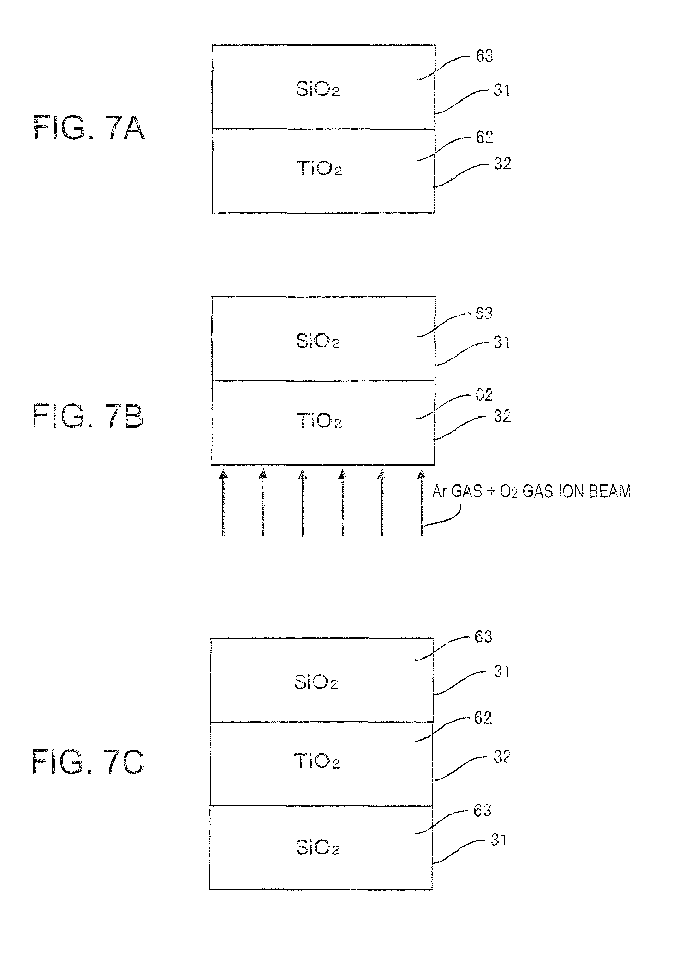

Conduction treatment was performed after the deposition of the fourth layer ($TiO_2$ layer 62), before depositing the fifth layer ($SiO_2$ layer). FIGS. 7A to 7C schematically represent how the surface of the $TiO_2$ layer 62 is subjected to the conduction treatment. FIG. 7A represents the state in which the $TiO_2$ layer 62 (fourth layer, high-refractive-index layer 32 in Example 1) is formed (deposited) on the $SiO_2$ layer 63 (third layer, low-refractive-index layer 31 in Example 1). FIG. 7B represents the state in which ion beams are shone on the $TiO_2$ layer 62. FIG. 7C represents the state in which the $SiO_2$ layer 63 (fifth layer, low-refractive-index layer 31 in Example 1) is deposited on the surface of the $TiO_2$ layer 62 subjected to the conduction treatment.

In the conduction treatment, the surface of the $TiO_2$ layer 62 was irradiated with an ionized, mixed gas of argon gas and oxygen gas after the vapor deposition of the $TiO_2$ layer 62, using the vapor deposition apparatus (vacuum vapor deposition apparatus) 100. The gas flown into the ion gun is a mixed gas of argon gas and oxygen gas. For example, an ion beam including argon gas (Ar gas; 16.5 sccm) and oxygen gas ($O_2$ gas; 3.5 sccm) at a mixture ratio of about 4.7: 1 was used for the irradiation (treatment) at an ion acceleration voltage of 800 eV and an ion beam current of 200 mA for 2 min. Note that the gas mixture ratio is decided by the vacuum degree and by the thickness of the $TiO_2$ layer 62, and is not necessarily required to be the foregoing value. Note that poor vacuum degrees and a thin $TiO_2$ layer 62 must be dealt with increased defect density, preferably by increasing the argon concentration. In the reverse situation, it is preferable to lower the oxygen concentration.

This completed the lens 10a that had the antireflection coating 3 of the 7-layer structure configured from the first-layer $SiO_2$ layer 63 of 29.6 nm thickness (low-refractive-index layer 31), the second-layer $ZrO_2$ layer 61 of 9.3 nm thickness (high-refractive-index layer 32), the third-layer $SiO_2$ layer 63 of 209.8 nm thickness (low-refractive-index layer 31), the fourth-layer $TiO_2$ layer 62 of 19.1 nm thickness subjected to the surface conduction treatment (high-refractive-index layer 32), the fifth-layer $SiO_2$ layer 63 of 34.0 nm. thickness (low-refractive-index layer 31), the sixth-layer $ZrO_2$ layer 61 of 44.8 nm thickness (high-refractive-index layer 32), and the seventh-layer $SiO_2$ layer 63 of 101.6 nm thickness (low-refractive-index layer 31). FIG. 4 and FIG. 5 summarize the values of these layers. Note that, here and below, the $TiO_2$ layer 62 subjected to the conduction treatment is labeled with an asterisk.

Sample S1 had the following thickness values.

Sum of the thickness (es) T1T of the $ZrO_2$ layers 61: 54.1 nm

Sum of the thickness(es) T2T of the $TiO_2$ layer 62: 19.1 nm

The sum of the thicknesses of the high-refractive-index layers (total thickness) TT: 73.2 nm

The proportion P of the $TiO_2$ layer sum of the thickness(es) T2T in the sum of the thickness(es) TT of the high-refractive-index layers: 26.1%

2.1.3 Deposition of Antifouling Layer

After the oxygen plasma treatment of the lens sample 10 provided with the antireflection coating 3, a pellet material containing "KY-130" (Shin-Etsu Chemical Co., Ltd.) that contains a large-molecular-weight fluorine-containing organosilicon compound was used as the deposition source and heated at about 500°C in the vacuum vessel 110 to evaporate the KY-130 and deposit the antifouling layer 4 on the antireflection coating 3 (on the final $SiO_2$ layer 31 of the antireflection coating 3). The vapor deposition time was about 3 minutes. By the oxygen plasma treatment, silanol groups are created on the surface of the final $SiO_2$ layer 31, and the chemical adhesion (chemical bonding) between the antireflection coating 3 and the antifouling layer 4 can be improved.

After the vapor deposition, the lens sample 10 was taken out of the vacuum vapor deposition apparatus 100, flipped over, and placed in the apparatus again, where the steps 2.1.2.2 to 2.1.2.4 and the step 2.1.3 were repeated in the same procedure to deposit the antireflection coating 3 and the antifouling layer 4. The lens sample 10 was then taken out of the vacuum vapor deposition apparatus 100. The resulting lens sample S1 of Example 1 thus included the hardcoat layer 2, the antireflection coating 3, and the antifouling layer 4 on each side of the lens base material 1.

2.2 Example 2 (Sample S2)

Sample S2 of Example 2 was produced in the same manner as for sample S1 of Example 1. Note, however, that, in sample S2 of Example 2, the $ZrO_2$ layers 61 were formed as the second and fourth layers of the high-refractive-index layers 32 of the antireflection coating 3, and the $TiO_2$ layer as the sixth layer. The conduction treatment was performed for the surface of the sixth-layer $TiO_2$ layer.

The antireflection coating 3 of sample S2 of Example 2 is configured from the first-layer $SiO_2$ layer 63 of 29.5 nm thickness (low-refractive-index layer 31), the second-layer $ZrO_2$ layer 61 of 9.8 nm thickness (high-refractive-index layer 32), the third-layer $SiO_2$ layer 63 of 208.7 nm thickness (low-refractive-index layer 31), the fourth-layer $ZrO_2$ layer 61 of 40.0 nm thickness (high-refractive-index layer 32), the fifth-layer $SiO_2$ layer 63 of 29.3 nm thickness (low-refractive-index layer 31), the sixth-layer $TiO_2$ layer 62 of 26.1 nm thickness subjected to the surface conduction treatment (high-refractive-index layer 32), and the seventh-layer $SiO_2$ layer 63 of 101.5 nm thickness (low-refractive-index layer 31).

Sample S2 had the following thickness values.
Sum of the thickness (es) T1T of the $ZrO_2$ layers 61: 49.8 nm
Sum of the thickness(es) T2T of the $TiO_2$ layer 62: 26.1 nm
The sum of the thicknesses of the high-refractive-index layers (sum of the thickness(es)) TT: 75.9 nm
The proportion P of the $TiO_2$ layer sum of the thickness (es) T2T in the sum of the thickness(es) TT of the high-refractive-index layers: 34.4%

2.3 Example 3 (Sample S3)

Sample S3 of Example 3 was produced in the same manner as for sample S1 of Example 1. Note, however, that, in sample S3 of Example 3, the $ZrO_2$ layer 61 was formed as the sixth layer of the high-refractive-index layers 32 of the antireflection coating 3, and the $TiO_2$ layers were formed as the second and fourth layers. The conduction treatment was performed for the surface of the fourth-layer $TiO_2$ layer.

The antireflection coating 3 of sample S3 of Example 3 was configured from the first-layer $SiO_2$ layer 63 of 27.9 nm thickness (low-refractive-index layer 31), the second-layer $TiO_2$ layer 62 of 5.4 nm thickness (high-refractive-index layer 32), the third-layer $SiO_2$ layer 63 of 201.4 nm thickness (low-refractive-index layer 31) , the fourth-layer $TiO_2$ layer 62 of 19.2 nm thickness subjected to the surface conduction treatment (high-refractive-index layer 32), the fifth-layer $SiO_2$ layer 63 of 32.7 nm thickness (low-refractive-index layer 31), the sixth-layer $ZrO_2$ layer 61 of 45.6 nm thickness (high-refractive-index layer 32), and the seventh-layer $SiO_2$ layer 63 of 100.1 nm thickness (low-refractive-index layer 31).

Sample S3 had the following thickness values.
Sum of the thickness(es) T1T of the $ZrO_2$ layer 61: 45.6 nm
Sum of the thickness (es) T2T of the $TiO_2$ layers 62: 24.6 nm
The sum of the thicknesses of the high-refractive-index layers (sum of the thickness(es)) TT: 70.2 nm
The proportion P of the $TiO_2$ layer sum of the thickness(es) T2T in the sum of the thickness (es) TT of the high-refractive-index layers: 35.0%

2.4 Example 4 (Sample S4)

Sample S4 of Example 4 was produced in the same manner as for sample S1 of Example 1. Note, however, that, in sample S4 of Example 4, the $ZrO_2$ layer 61 was formed as the fourth layer of the high-refractive-index layers 32 of the antireflection coating 3, and the $TiO_2$ layers 62 were formed as the second and sixth layers. The conduction treatment was performed for the surface of the sixth-layer $TiO_2$ layer 62.

The antireflection coating 3 of sample S4 of Example 4 was configured from the first-layer $SiO_2$ layer 63 of 28.0 nm thickness (low-refractive-index layer 31), the second-layer $TiO_2$ layer 62 of 5.4 nm thickness (high-refractive-index layer 32), the third-layer $SiO_2$ layer 63 of 202.8 nm thickness (low-refractive-index layer 31), the fourth-layer $ZrO_2$ layer 61 of 35.4 nm thickness (high-refractive-index layer 32), the fifth-layer $SiO_2$ layer 63 of 33.6 nm thickness (low-refractive-index layer 31), the sixth-layer $TiO_2$ layer 62 of 24.2 nm thickness subjected to the surface conduction treatment (high-refractive-index layer 32), and the seventh-layer $SiO_2$ layer 63 of 102.3 nm thickness (low-refractive-index layer 31).

Sample S4 had the following thickness values.

Sum of the thickness(es) T1T of the $ZrO_2$ layer 61: 35.4 nm

Sum of the thickness(es) T2T of the $TiO_2$ layers 62: 29.6 nm

The sum of the thickness of high-refractive-index layers (sum of the thickness(es)) TT: 65.0 nm

The proportion P of the $TiO_2$ layer sum of the thickness(es) T2T in the sum of the thickness(es) TT of the high-refractive-index layers: 45.5% 2.5 Example 5(sample S5)

Sample S5 of Example 5 was produced in the same manner as for sample S1 of Example 1. Note, however, that, in sample S5 of Example 5, the $ZrO_2$ layer 61 was formed as the second layer of the high-refractive-index layers 32 of the antireflection coating 3, and the $TiO_2$ layers 62 were formed as the fourth and sixth layers. The conduction treatment was performed for the surface of the sixth-layer $TiO_2$ layer.

The antireflection coating 3 of sample S5 of Example 5 was configured from the first-layer $SiO_2$ layer 63 of 29.9 nm thickness (low-refractive-index layer 31), the second-layer $ZrO_2$ layer 61 of 9.6 nm thickness (high-refractive-index layer 32), the third-layer $SiO_2$ layer 63 of 209.9 nm thickness (low-refractive-index layer 31), the fourth-layer $TiO_2$ layer 62 of 21.0 nm thickness (high-refractive-index layer 32), the fifth-layer $SiO_2$ layer 63 of 42.8 nm thickness (low-refractive-index layer 31), the sixth-layer $TriO_2$ layer 62 of 23.7 nm thickness subjected to the surface conduction treatment (high-refractive-index layer 32), and the seventh-layer $SiO_2$ layer 63 of 106.1 nm thickness (low-refractive-index layer 31).

Sample S5 had the following thickness values.

Sum of the thickness(es) T1T of the $ZrO_2$ layer 61: 9.6 nm

Sum of the thickness(es) T2T of the $TiO_2$ layers 62: 44.7 nm

The sum of the thicknesses of the high-refractive-index layers (sum of the thickness(es)) TT: 54.3 nm

The proportion P of the $TiO_2$ layer sum of the thickness(es) T2T in the sum of the thickness (es) TT of the high-refractive-index layers: 82.3%

2.6 Comparative Example 1 (Sample R1)

For comparison with the samples obtained in Examples 1 to 5, sample R1 of Comparative Example 1 was produced in the same manner as for sample S1 of Example 1. Note, however, that, in sample R1 of Comparative Example 1, the $ZrO_2$ layers 61 were formed for all of the high-refractive-index layers 32 (second layer, fourth layer, sixth layer) of the antireflection coating 3.

The antireflection coating 3 of sample R1 of Comparative Example 1 was configured from the first-layer $SiO_2$ layer 63 of 33.0 nm thickness (low-refractive-index layer 31), the second-layer $ZrO_2$ layer 61 of 9.0 nm thickness (high-refractive-index layer 32), the third-layer $SiO_2$ layer 63 of 220.0 nm thickness (low-refractive-index layer 31), the fourth-layer $ZrO_2$ layer 61 of 32.0 nm thickness (high-refractive-index layer 32), the fifth-layer $SiO_2$ layer 63 of 29.0 nm thickness (low-refractive-index layer 31), the sixth-layer $ZrO_2$ layer 61 of 44.0 nm thickness (high-refractive-index layer 32), and the seventh-layer $SiO_2$ layer 63 of 100.0 nm thickness (low-refractive-index layer 31) .

Sample R1 had the following thickness values.

Sum of the thickness (es) T1T of the $ZrO_2$ layers 61: 85.0 nm

Sum of the thickness (es) T2T of the $TiO_2$ layer 62: 0.0 nm

The sum of the thicknesses of the high-refractive-index layers (sum of the thickness(es)) TT: 85.0 nm

The proportion P of the $TiO_2$ layer sum of the thickness(es) T2T in the sum of the thickness(es) TT of the high-refractive-index layers: 0.0%

2.7 Comparative Example 2 (Sample R2)

Sample R2 of Comparative Example 2 was produced in the same manner as for sample R1 of Comparative Example 1. Note, however, that, in sample R2 of Comparative Example 2, the $TiO_2$ layer 62 was formed as the second layer of the high-refractive-index layers 32, and the $ZrO_2$ layers 61 were formed as the fourth and sixth layers. The conduction treatment was performed for the surface of the second-layer $TiO_2$ layer 62.

The antireflection coating 3 of sample R2 of Comparative Example 2 was configured from the first-layer $SiO_2$ layer 63 of 28.85 nm thickness (low-refractive-index layer 31), the second-layer $TiO_2$ layer 62 of 5 nm thickness subjected to the surface conduction treatment (high-refractive-index layer 32), the third-layer $SiO_2$ layer 63 of 203 nm thickness (low-refractive-index layer 31), the fourth-layer $ZrO_2$ layer 61 of 35.58 nm thickness (high-refractive-index layer 32), the fifth-layer $SiO_2$ layer 63 of 22.41 nm thickness (low-refractive-index layer 31), the sixth-layer $ZrO_2$ layer 61 of 49.34 nm thickness (high-refractive-index layer 32), and the seventh-layer $SiO_2$ layer 63 of 96.25 nm thickness (low-refractive-index layer 31).

Sample R2 had the following thickness values.
Sum of the thickness(es) T1T of the $ZrO_2$ layers 61: 84.9 nm
Sum of the thickness(es) T2T of the $TiO_2$ layer 62: 5.0 nm
The sum of the thicknesses of the high-refractive-index layers (sum of the thickness(es)) TT: 89.9 nm
The proportion P of the $TiO_2$ layer sum of the thickness(es) T2T in the sum of the thickness(es) TT of the high-refractive-index layers: 5.6%

2.8 Comparative Example 3 (Sample R3)

Sample R3 of Comparative Example 3 was produced in the same manner as for sample R1 of Comparative Example 1. Note, however, that, in Sample R3 of Comparative Example 3, the $TiO_2$ layers 62 were formed for all of the high-refractive-index layers 32 (second layer, fourth layer, sixth layer) of the antireflection coating 3. The conduction treatment was performed for the surface of the sixth-layer $TiO_2$ layer 62.
The antireflection coating 3 of sample R3 of Comparative Example 3 was configured from the first-layer $SiO_2$ layer 63 of 31.3 nm thickness (low-refractive-index layer 31), the second-layer $TiO_2$ layer 62 of 6.0 nm thickness (high-refractive-index layer 32), the third-layer $SiO_2$ layer 63 of 215.4 nm thickness (low-refractive-index layer 31), the fourth-layer $TiO_2$ layer 62 of 23.2 nm thickness (high-refractive-index layer 32), the fifth-layer $SiO_2$ layer 63 of 37.6 nm thickness (low-refractive-index layer 31), the sixth-layer $TiO_2$ layer 62 of 26.9 nm thickness subjected to the surface conduction treatment (high-refractive-index layer 32), and the seventh-layer $SiO_2$ layer 63 of 103.8 nm thickness (low-refractive-index layer 31).
Sample R3 had the following thickness values.
Sum of the thickness(es) T1T of the $ZrO_2$ layer 61: 0.0 nm
Sum of the thickness(es) T2T of the $TiO_2$ layers 62: 56.1 nm
The sum of the thicknesses of the high-refractive-index layers (sum of the thickness(es)) TT: 56.1 nm
The proportion P of the $TiO_2$ layer sum of the thickness (es) T2T in the sum of the thickness (es) TT of the high-refractive-index layers: 100.0%

3. Second Embodiment

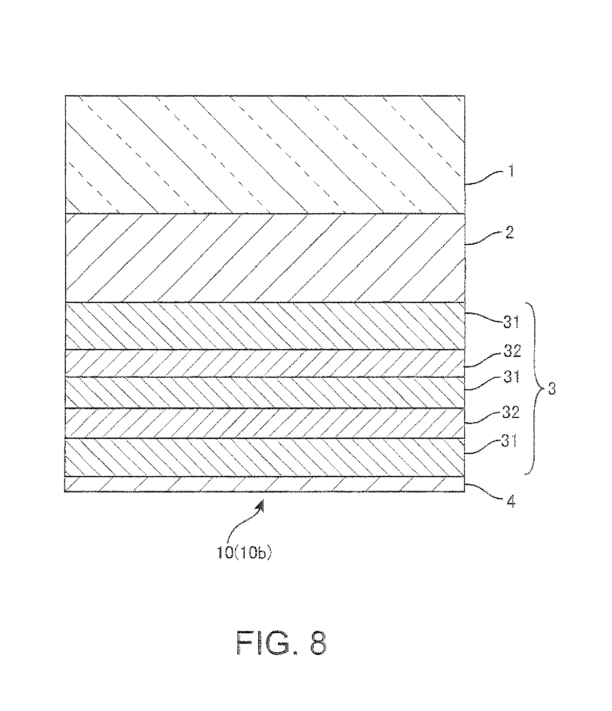

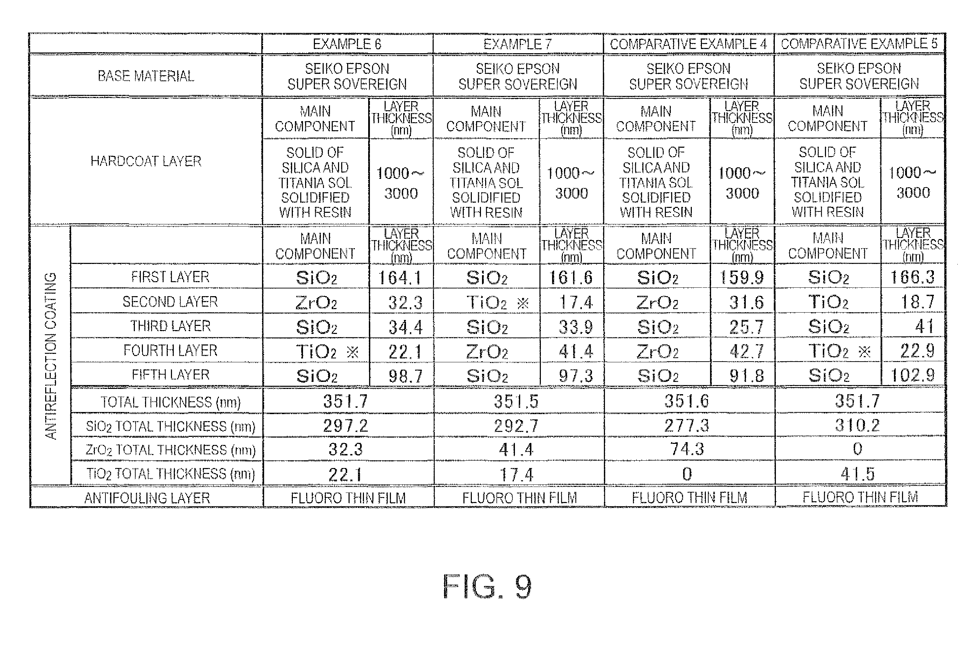

FIG. 8 shows a cross sectional configuration of a lens of Second Embodiment of the invention on one side of the lens relative to the base material at the center. A lens (optical article) 10 (10b) includes a lens base material (optical base material) 1, a hardcoat layer 2 formed on the surface of the lens base material 1, a translucent, multilayer antireflection coating 3 formed on the hardcoat layer 2, and an antifouling layer 4 formed on the antireflection coating 3. The antireflection coating 3 has five layers (n = 2), in which the first, third, and fifth layers represent the low-refractive-index layers 31, and the second and fourth layers represent the high-refractive-index layers 32. The other configuration is the same as that of First Embodiment, and explanations thereof are omitted using the same reference numerals in the appended figures.
Samples (Examples 6 and 7, Comparative Examples 4 and 5) were produced for the lens 10b that includes the 5-layer antireflection coating 3. FIG. 9 summarizes the layer structures of the samples of Examples and Comparative Examples for the 5-layer antireflection coating 3.

3.1 Example 6 (Sample S6)

Sample S6 of Example 6 was produced in the same manner as for sample S1 of Example 1. Note, however, that the antireflection coating 3 in sample S6 of Example 6 has five layers, and that the $ZrO_2$ layer 61 and the $TiO_2$ layer 62 were formed as the second and fourth layers, respectively, of the high-refractive-index layers 32. Specifically, the antireflection coating 3 of sample S6 was configured from the first-layer $SiO_2$ layer 63 of 164.1 nm thickness (low-refractive-index layer 31), the second-layer $ZrO_2$ layer 61 of 32.3 nm thickness (high-refractive-index layer 32), the third-layer $SiO_2$ layer 63 of 34.4 nm thickness (low-refractive-index layer 31), the fourth-layer $TiO_2$ layer 62 of 22.1 nm thickness subjected to the surface conduction treatment (high-refractive-index layer 32), and the fifth-layer $SiO_2$ layer 63 of 98.7 nm thickness (low-refractive-index layer 31).
Sample S6 had the following thickness values.
Sum of the thickness (es) T1T of the $ZrO_2$ layer 61: 32.3 nm
Sum of the thickness(es) T2T of the $TiO_2$ layer 62: 22.1 nm
The sum of the thicknesses of the high-refractive-index layers (sum of the thickness(es)) TT: 54.4 nm

The proportion P of the $TiO_2$ layer sum of the thickness(es) T2T in the sum of the thickness(es) TT of the high-refractive-index layers: 40.6% 3.2 Example 7 (Sample S7)

Sample S7 of Example 7 was produced in the same manner as for sample S6 of Example 6. Note, however, that in sample S7 of Example 7, the $ZrO_2$ layer 61 and the $TiO_2$ layer 62 were formed as the fourth layer and the second layer, respectively, of the high-refractive-index layer 32. Specifically, the antireflection coating 3 of sample S7 was configured from the first-layer $SiO_2$ layer 63 of 161.6 nm thickness (low-refractive-index layer 31), the second-layer $TiO_2$ layer 62 of 17.4 nm thickness subjected to the surface conduction treatment (high-refractive-index layer 32), the third-layer $SiO_2$ layer 63 of 33.9 nm thickness (low-refractive-index layer 31), the fourth-layer $ZrO_2$ layer 61 of 41.4 nm thickness (high-refractive-index layer 32), and the fifth-layer $SiO_2$ layer 63 of 97.3 nm thickness (low-refractive-index layer 31).

Sample S7 had the following thickness values.

Sum of the thickness(es) T1T of the $ZrO_2$ layer 61: 41.4 nm

Sum of the thickness(es) T2T of the $TiO_2$ layer 62: 17.4 nm

The sum of the thicknesses of the high-refractive-index layers (sum of the thickness(es)) TT: 58.8 nm

The proportion P of the $TiO_2$ layer sum of the thickness(es) T2T in the sum of the thickness(es) TT of the high-refractive-index layers: 40.0%

3.3 Comparative Example 4 (Sample R4)

For comparison with the samples obtained in the foregoing Examples 6 and 7, sample R4 of Comparative Example 4 was produced in the same manner as for sample S6 of Example 6. Note, however, that, in sample R4 of Comparative Example 4, the $ZrO_2$ layers 61 were formed for all of the high-refractive-index layers 32 (second and fourth layers). Specifically, the antireflection coating 3 of sample R4 was configured from the first-layer $SiO_2$ layer 63 of 159.9 nm thickness (low-refractive-index layer 31), the second-layer $ZrO_2$ layer 61 of 31.6 nm thickness (high-refractive-index layer 32), the third-layer $SiO_2$ layer 63 of 25.7 nm thickness (low-refractive-index layer 31), the fourth-layer $ZrO_2$ layer 61 of 42.7 nm thickness (high-refractive-index layer 32), and the fifth-layer $SiO_2$ layer 63 of 91.8 nm thickness (low-refractive-index layer 31).

Sample R4 had the following thickness values.

Sum of the thickness (es) T1T of the $ZrO_2$ layers 61: 74.3 nm

Sum of the thickness(es) T2T of the $TiO_2$ layer 62: 0.0 nm

The sum of the thicknesses of the high-refractive-index layers (sum of the thickness(es)) TT: 74.3 nm

The proportion P of the $TiO_2$ layer sum of the thickness(es) T2T in the sum of the thickness (es) TT of the high-refractive-index layers: 0.0%

3.4 Comparative Example 5 (Sample R5)

Sample R5 of Comparative Example 5 was produced in the same manner as in Comparative Example 4. Note, however, that, in sample R5 of Comparative Example 5, the $TiO_2$ layer 62 was formed for all of the high-refractive-index layers 32 (second layer, fourth layer). The conduction treatment was performed for the surface of the fourth-layer $TiO_2$ layer 62. Specifically, the antireflection coating 3 of sample R5 was configured from the first-layer $SiO_2$ layer 63 of 166.3 nm thickness (low-refractive-index layer 31), the second-layer $TiO_2$ layer 62 of 18.7 nm thickness (high-refractive-index layer 32), the third-layer $SiO_2$ layer 63 of 41 nm thickness (low-refractive-index layer 31), the fourth-layer $TiO_2$ layer 62 of 22.9 nm thickness subjected to the surface conduction treatment (high-refractive-index layer 32), and the fifth-layer $SiO_2$ layer 63 of 102.9 nm thickness (low-refractive-index layer 31).

Sample R5 had the following thickness values.

Sum of the thickness(es) T1T of the $ZrO_2$ layer 61: 0.0 nm

Sum of the thickness(es) T2T of the $TiO_2$ layers 62: 41.5 nm

The sum of the thicknesses of the high-refractive-index layers (sum of the thickness(es)) TT: 41.5 nm

The proportion P of the $TiO_2$ layer sum of the thickness(es) T2T in the sum of the thickness(es) TT of the high-refractive-index layers: 100.0%

4. Third Embodiment

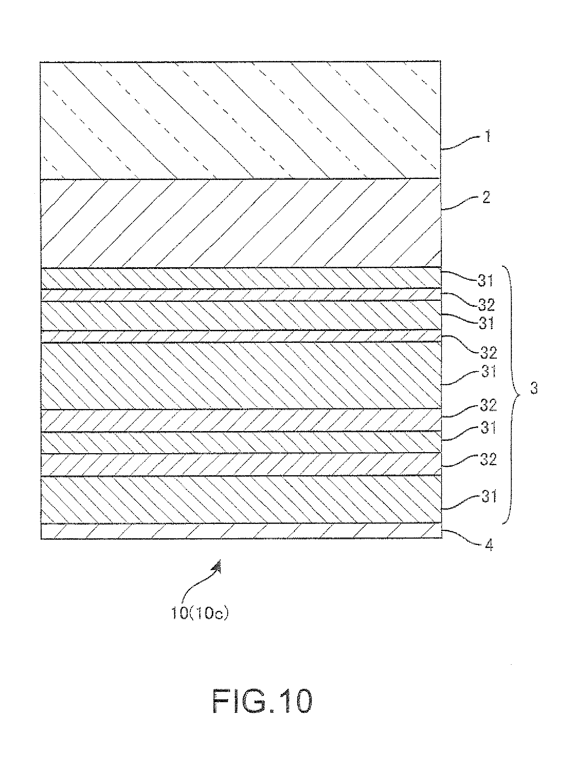

FIG. 10 shows a cross sectional configuration of a lens of Third Embodiment of the invention on one side of the lens relative to the base material at the center. A lens (optical article) 10 (10c) includes a lens base material (optical base material) 1, a hardcoat layer 2 formed on the surface of the lens base material 1, a translucent, multilayer antireflection coating 3 formed on the hardcoat layer 2, and an antifouling layer 4 formed on the antireflection coating 3. Note that the antireflection coating has nine layers (n = 4), in which the first, third, fifth, seventh, and ninth layers represent the low-refractive-index layers 31, and the second, fourth, sixth, and eighth layers represent the high-refractive-index layers 32. At least one of the second, fourth, sixth, and eighth layers of the high-refractive-index layers 32 is the $ZrO_2$ layer 61. The other layers are $TiO_2$ layers 62. The other configuration is the same as that of First Embodiment, and explanations thereof are omitted using the same reference numerals in the appended figures.

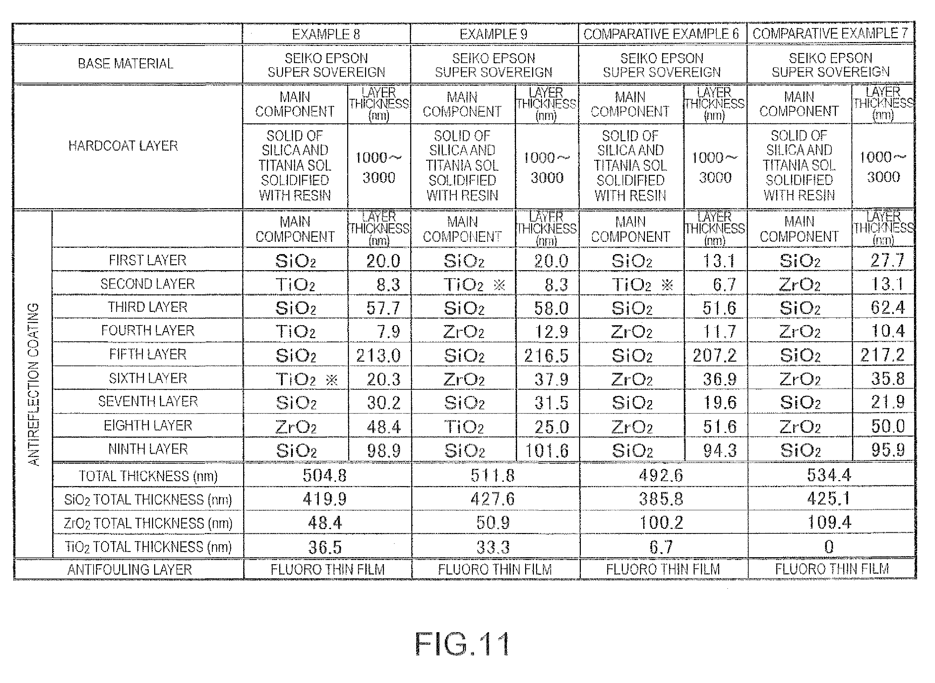

Samples (Examples 8 and 9, Comparative Examples 6 and 7) were produced for the lens 10c that includes the 9-layer antireflection coating 3. FIG. 11 summarizes the layer structures of the samples of Examples and Comparative Examples for the 9-layer antireflection coating 3.

4.1 Example 8 (Sample S8)

Sample S8 of Example 8 was produced in the same manner as for sample S1 of Example 1. Note, however, that the antireflection coating 3 in sample S8 of Example 8 has nine layers, in which the $ZrO_2$ layer 61 was formed as the eighth layer of the high-refractive-index layers 32, and the $TiO_2$ layers 62 were formed as the second, fourth, and sixth layers. The conduction treatment was performed for the surface of the sixth-layer $TiO_2$ layer 62. Specifically, the antireflection coating 3 of sample S8 was configured from the first-layer $SiO_2$, layer 63 of 20.0 nm thickness (low-refractive-index layer 31), the second-layer $TiO_2$ layer 62 of 8.3 nm thickness (high-refractive-index layer 32), the third-layer $SiO_2$ layer 63 of 57.7 nm thickness (law-refractive-index layer 31), the fourth-layer $TiO_2$ layer 62 of 7.9 nm thickness (high-refractive-index layer 32), the fifth-layer $SiO_2$ layer 63 of 213.0 nm thickness (low-refractive-index layer 31), the sixth-layer $TiO_2$ layer 62 of 20.3 nm thickness subjected to the surface conduction treatment (high-refractive-index layer 32), the seventh-layer $SiO_2$ layer 63 of 30.2 nm thickness (low-refractive-index layer 31), the eighth-layer $ZrO_2$ layer 61 of 48.4 nm thickness (high-refractive-index layer 32), and the ninth-layer $SiO_2$ layer 63 of 98.9 nm thickness (low-refractive-index layer 31).

Sample S8 had the following thickness values.

Sum of the thickness(es) T1T of the $ZrO_2$ layer 61: 48.4 nm
Sum of the thickness(es) T2T of the $TiO_2$ layers 62: 36.5 nm
The sum of the thicknesses of the high-refractive-index layers (sum of the thickness(es)) TT: 84.9 nm
The proportion P of the $TiO_2$ layer sum of the thickness(es) T2T in the sum of the thickness (es) TT of the high-refractive-index layers: 43.0%

4.2 Example 9 (Sample S9)

Sample S9 of Example 9 was produced in the same manner as for sample S8 of Example 8. Note that the $ZrO_2$ layers 61 were formed as the fourth and sixth layers of the high-refractive-index layers 32, and the $TiO_2$ layers 62 were formed as the second and eighth layers. The conduction treatment was performed for the surface of the second-layer $TiO_2$ layer 62. Specifically, the antireflection coating 3 of sample S9 was configured from the first-layer $SiO_2$ layer 63 of 20.0 nm thickness (low-refractive-index layer 31), the second-layer $TiO_2$ layer 62 of 8.3 nm thickness subjected to the surface conduction treatment (high-refractive-index layer 32), the third-layer $SiO_2$ layer 63 of 58.0 nm thickness (low-refractive-index layer 31), the fourth-layer $ZrO_2$ layer 61 of 12.9 nm thickness (high-refractive-index layer 32), the fifth-layer $SiO_2$ layer 63 of 216.5 nm thickness (low-refractive-index layer 31), the sixth-layer $ZrO_2$ layer 61 of 37.9 nm thickness (high-refractive-index layer 32), the seventh-layer $SiO_2$ layer 63 of 31.5 nm thickness (low-refractive-index layer 31), the eighth-layer $TiO_2$ layer 62 of 25.0 nm thickness (high-refractive-index layer 32), and the ninth-layer $SiO_2$ layer 63 of 101.6 nm thickness (low-refractive-index layer 31).

Sample S9 had the following thickness values.

Sum of the thickness(es) T1T of the $ZrO_2$ layer 61: 50.9 nm
Sum of the thickness(es) T2T of the $TiO_2$ layer 62: 33.3 nm
The sum of the thicknesses of the high-refractive-index layers (sum of the thickness(es)) TT: 84.2 nm
The proportion P of the $TiO_2$ layer sum of the thickness(es) T2T in the sum of the thickness(es) TT of the high-refractive-index layers: 39.6%

4.3 Comparative Example 6 (Sample R6)

For comparison with the samples obtained in the foregoing Examples 8 and 9, sample R6 of Comparative Example 6 was produced in the same manner as in Example 8. Note, however, that, in sample R6 of Comparative Example 6, the $ZrO_2$ layers 61 were formed as the fourth, sixth, and eighth layers of the high-refractive-index layer 32, and the conduction treatment was performed for the surface of the second-layer $TiO_2$ layer 62. Specifically, the antireflection coating 3 of sample R6 was configured from the first-layer $SiO_2$ layer 63 of 13.1 nm thickness (low-refractive-index layer 31), the second-layer $TiO_2$ layer 62 of 6.7 nm thickness subjected to the conduction treatment (high-refractive-index layer 32), the third-layer $SiO_2$ layer 63 of 51.6 nm thickness (low-refractive-index layer 31), the fourth-layer $ZrO_2$

layer 61 of 11.7 nm thickness (high-refractive-index layer 32), the fifth-layer $SiO_2$ layer 63 of 207.2 nm thickness (low-refractive-index layer 31), the sixth-layer $ZrO_2$ layer 61 of 36.9 nm thickness (high-refractive-index layer 32), the seventh-layer $SiO_2$ layer 63 of 19.6 nm thickness (low-refractive-index layer 31), the eighth-layer $ZrO_2$ layer 61 of 51.6 nm thickness (high-refractive-index layer 32), and the ninth-layer $SiO_2$ layer 63 of 94.3 nm thickness (low-refractive-index layer 31).

Sample R6 had the following thickness values.
Sum of the thickness(es) T1T of the $ZrO_2$ layers 61: 100.2 nm
Sum of the thickness(es) T2T of the $TiO_2$ layer 62: 6.7 nm
The sum of the thicknesses of the high-refractive-index layers (sum of the thickness(es)) TT: 106.9 nm
The proportion P of the $TiO_2$ layer sum of the thickness(es) T2T in the sum of the thickness(es) TT of the high-refractive-index layers: 6.3%

4.4 Comparative Example 7 (Sample R7)

Sample R7 of Comparative Example 7 was produced in the same manner as in Comparative Example 6. Note that the $ZrO_2$ layers 61 were formed for all of the high-refractive-index layers 32 (second, fourth, sixth, and eighth layers). Specifically, the antireflection coating 3 of sample R7 was configured from the first-layer $SiO_2$ layer 63 of 27.7 nm thickness (low-refractive-index layer 31), the second-layer $ZrO_2$ layer 61 of 13.1 nm thickness (high-refractive-index layer 32), the third-layer $SiO_2$ layer 63 of 62.4 nm thickness (low-refractive-index layer 31), the fourth-layer $ZrO_2$ layer 61 of 10.4 nm thickness (high-refractive-index layer 32), the fifth-layer $SiO_2$ layer 63 of 217.2 nm thickness (low-refractive-index layer 31), the sixth-layer $ZrO_2$ layer 61 of 35.8 nm thickness (high-refractive-index layer 32), the seventh-layer $SiO_2$ layer 63 of 21.9 nm thickness (low-refractive-index layer 31), the eighth-layer $ZrO_2$ layer 61 of 50.0 nm thickness (high-refractive-index layer 32), and the ninth-layer $SiO_2$ layer 63 of 95.9 nm thickness (low-refractive-index layer 31).

Sample R7 had the following thickness values.
Sum of the thickness (es) T1T of the $ZrO_2$ layers 61: 109.4 nm
Sum of the thickness(es) T2T of the $TiO_2$ layer 62: 0.0 nm
The sum of the thicknesses of the high-refractive-index layers (sum of the thickness(es)) TT: 109.4 nm
The proportion P of the $TiO_2$ layer sum of the thickness(es) T2T in the sum of the thickness(es) TT of the high-refractive-index layers: 0.0%

5. Optical Constants of the Layers

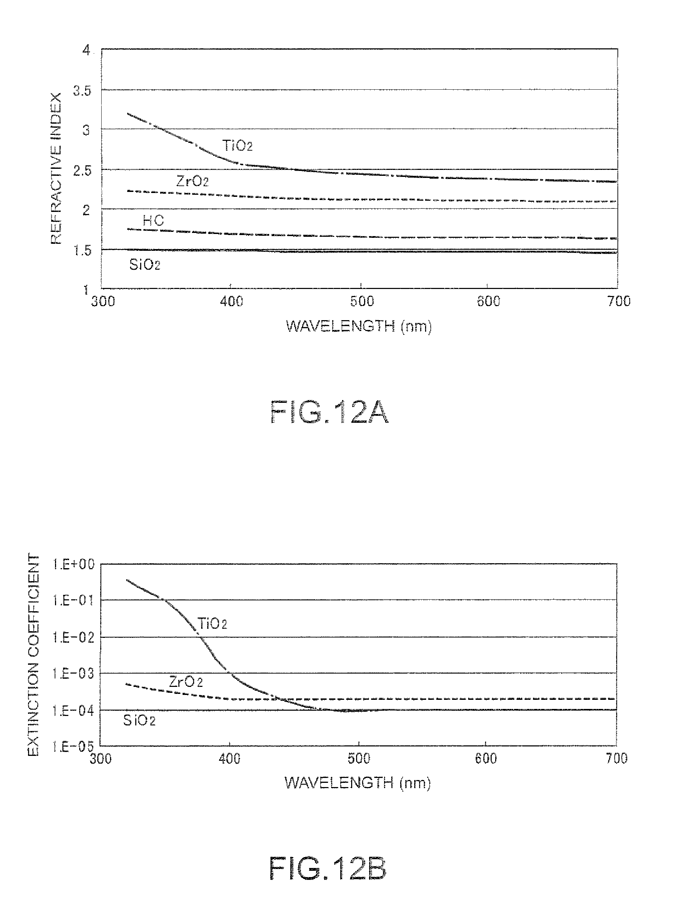

FIGS. 12A and 12B represent the optical constants of the $SiO_2$ layer 63, the $ZrO_2$ layer 61, and the $TiO_2$ layer 62. FIG. 12A represents the relationship between wavelength and refractive index. FIG. 12B represents the relationship between wavelength and extinction coefficient.

As can be seen in FIGS. 12A and 12B, the refractive index and decay coefficient become higher in order of the $TiO_2$ layer 62, the $ZrO_2$ layer 61, and the $SiO_2$ layer 63 in the wavelength region of 400 nm or less (near-ultraviolet wavelength region). Particularly, the $TiO_2$ layer 62 easily reflects and absorbs visible light in the near-ultraviolet region, as in the ultraviolet region. Thus, the UV-induced deterioration of the hardcoat layer 2 can be suppressed with the $TiO_2$ layer 62 used as the high-refractive-index layer 32.

Specifically, the hardcoat layer 2 is typically a solid obtained by solidifying materials such as a silica (silicon dioxide, $SiO_2$) sol and a titania (titanium dioxide, $TiO_2$) sol with resin (organic binder), and has a thickness on the order of several thousand nanometers. Titania is an optically active material, and acts to decompose organic materials by photocatalytic effect. The organic binder component contained in the hardcoat layer 2 is thus decomposed. Specifically, breaking the C-C bonds in the organic binder causes the hardcoat layer 2 to be detached. Ultraviolet light acts to directly decompose the C-C bonds in the organic binder. Thus, the $TiO_2$ layer 62 can reduce the quantity of the ultraviolet light that reaches the hardcoat layer 2 more than that possible with the $ZrO_2$ layer 61. Another advantage of the $TiO_2$ layer 62 is that it makes the surface conduction treatment easier.

The $TiO_2$ layer 62, however, has lower moisture permeability than the $ZrO_2$ layer 61. This makes it difficult to obtain desirable water resistance for the lens 10. Specifically, the $TiO_2$ layer 62 is not desirable for use in terms of water resistance, because the low film moisture permeability causes defects such as swelling of the optical article.

The hardcoat layer 2 typically contains a titania sol, as described above. This is problematic because, in response to ultraviolet light (UV), the titania contained in the hardcoat layer 2 forms $TiO_x$, that has oxygen losses, and turns blue in color. It is known empirically that $TiO_x$ generation can be suppressed in the presence of moisture around the titania, and that the discoloration of the hardcoat layer 2 can thus be suppressed. The $TiO_2$ layer 62 can suppress discoloration with its relatively low transmittance in the near-ultraviolet region and ultraviolet region. However, because of the relatively low moisture permeability, the $TiO_2$ layer 62 cannot sufficiently supply moisture to the hardcoat layer 2, and is unable to solve the discoloration problem of the hardcoat layer 2.

6. Evaluations of Samples S1 to S9 and R1 to R7

The samples S1 to S9 and R1 to R7 produced as above were evaluated for scratch resistance, UV-induced deterioration, antireflection characteristic, heat resistance, water resistance, UV-induced discoloration of hardcoat layer, and antistatic performance. The evaluation method for each item is described below.

6.1 Scratch Resistance

Samples with the antireflection coating of a 7-layer structure (lens sample S1 to S5 and R1 to R3) were selected as representative samples, and evaluated for scratch resistance in a bayer test.

Lens samples S1 to S5 and R1 to R3, and a standard lens (CR39 (non-coat); Sunlux) were simultaneously scratched with 500-g media moved back and forth 600 times, using a bayer tester (COLTS Laboratories). This procedure is in accordance with the standard conditions specified by COLTS Laboratories. The haze value H of the scratched samples was then measured using a tester (automatic haze computer; Suga Test Instruments Co., Ltd.), and bayer value VR was determined according to the following equation (3).

$$VR = \{Hst\ (after\ test) - Hst\ (before\ test)\}/\{Hsa\ (after\ test) - Hsa\ (before\ test)\} \qquad (3),$$

where VR is the bayer value, H the haze value, st the standard lens, and sa the lens sample.

The bayer value VR of each sample so determined was normalized with the bayer value VR1 of sample R1, and the normalized bayer value VRN was used to evaluate scratch resistance. The normalized bayer value VRN (hereinafter, "bayer ratio") of sample R1 is 1.00.

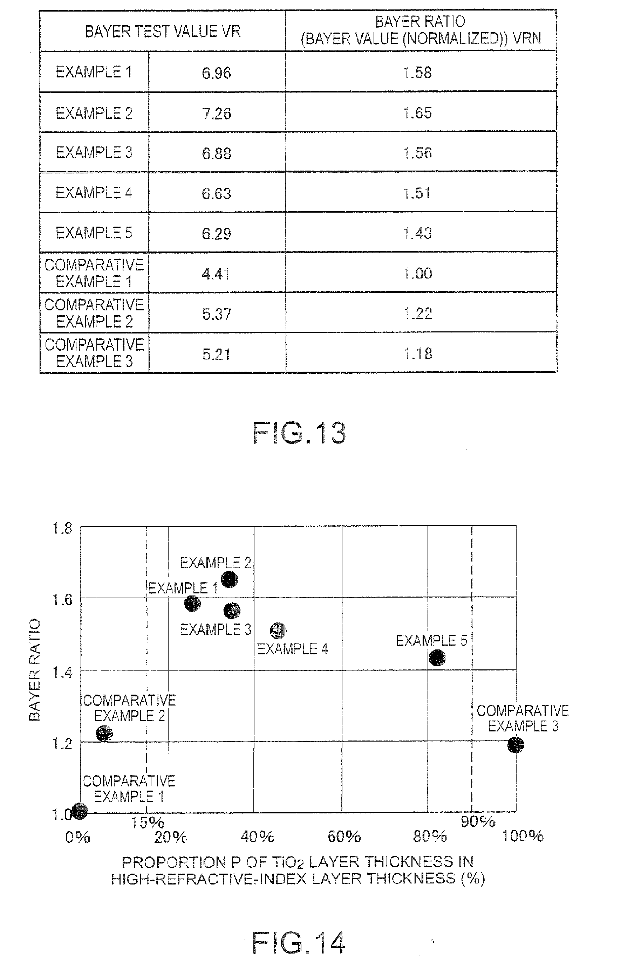

FIG. 13 presents the measured bayer values VR and the bayer ratios (normalized bayer values) VRN. FIG. 14 represents the relationship between bayer ratio VRN and the proportion P of the sum of the thickness(es) T2T of the $TiO_2$ layer 62 in the sum of the thickness(es) TT of the high-refractive-index layers 32. The bayer value VR represents the abrasion resistance with respect to the standard lens, and samples S1 to S5 and R1 to R3 all had abrasion resistances higher than that of the standard lens. Among these samples, sample R1 of Comparative Example 1 had the lowest abrasion resistance, and sample S2 of Example 2 had the highest abrasion resistance.

The experiments by the present inventors also revealed that, as represented in FIG. 14, the bayer ratio VRN was not proportional (no linear changes) to the proportion P of the sum of the thickness(es) T2T of the $TiO_2$ layer 62 in the sum of the thickness(es) TT of the high-refractive-index layers 32. Specifically, it was found that samples S1 to S5 of Examples 1 to 5 had higher bayer ratios than sample R1 of Comparative Example 1 (100% $ZrO_2$ layer 61) and sample R3 of Comparative Example 3 (100% $TiO_2$ layer 62), and that the abrasion resistance could be improved by combining the $ZrO_2$ layer 61 and the $TiO_2$ layer 62. The abrasion resistance, higher with the $TiO_2$ layer 62 than with the $ZrO_2$ layer 61, was found to improve by combining the $ZrO_2$ layer 61 and the $TiO_2$ layer 62. It was also found that the abrasion resistance could be improved when the high-refractive-index layers include the $ZrO_2$ layer 61 as one of the layers and when the remaining layers are $TiO_2$ layers 62, without using a complex component system in which $ZrO_2$ and $TiO_2$ components are mixed, or in which a $ZrO_2$-$TiO_2$ hybrid is used for one of the high-refractive-index layers.

Because sample R2 of Comparative Example 2 with the 5.6% proportion P has about the same bayer ratio as sample R3 that has 100% proportion P, the preferred range of proportion P was found to be 15% ≤ P ≤ 90% (1).

With this range of proportion P, the lens 10 can have abrasion resistance with the bayer ratio of about 1.4 or more with respect to sample R1 of Comparative Example 1 in which the $ZrO_2$ layer 61 is 100%. It can also be seen from FIG. 14 that the more preferred range of proportion P is 200 ≤ P ≤ 60% (2).

With this range of proportion P, the lens 10 can have abrasion resistance with the bayer ratio of about 1.5 or more with respect to sample R1 of Comparative Example 1 in which the $ZrO_2$ layer 61 is 100%.

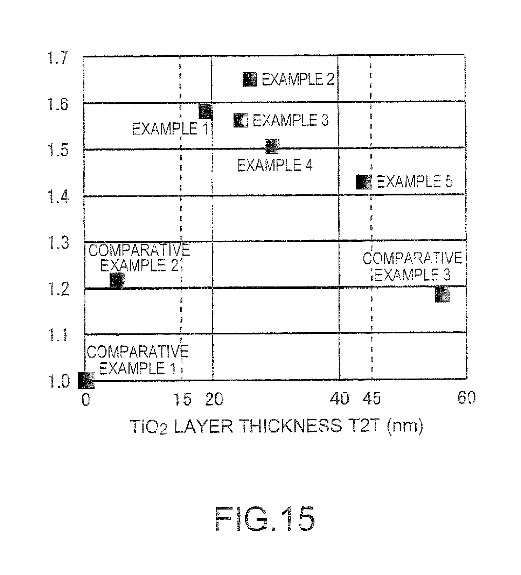

FIG. 15 represents the bayer ratio VRN for the sum of the thickness (es) T2T of the $TiO_2$ layer 62. As represented in the figure, it was found that the bayer ratio VRN did not show linear changes with respect to the sum of the thickness (es) T2T of the $TiO_2$ layer 62, and that the lens 10 could have about 1.4 or higher abrasion resistance (scratch resistance) with respect to the bayer ratio VRN of sample R1 of Comparative Example 1, when the sum of the thickness(es) T2T of the $TiO_2$ layer 62 was about 15 nm to about 45 nm.

6.2 UV-Induced Deterioration (Ultraviolet Light Resistance)

Lens samples S1 to S9 and R1 to R7 were evaluated for the extent of UV-induced deterioration (ultraviolet resistance, durability). UV-induced deterioration was evaluated as follows. Lens samples S1 to S9 and R1 to R7 were irradiated with light from a UV-A lamp for 5 hours under condensing environment while being heated at 50°C. This was repeated in 8 cycles. Evaluation was performed using a Q-Panel Lab Products Weathering Tester, and a UVA-340 lamp.

Evaluation criteria are as follows.

Excellent: No detachment of hardcoat layer

Good: Some detachment is recognized in hardcoat layer but only to the extent as not to cause problems for a spectacle lens (acceptable level)

Poor: Serious detachment, poor UV durability

Further, the transmittance of the antireflection coating 3 was calculated for each of the lens samples S1 to S9 and R1 to R7, and a mean value of the transmittances (mean transmittance) of light in the ultraviolet to near-ultraviolet region (315 nm to 380 nm) was determined.

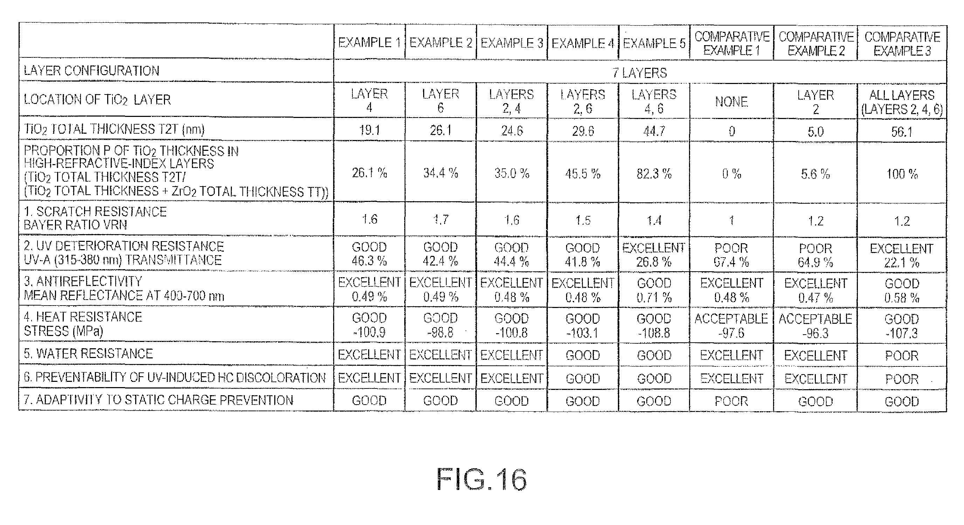

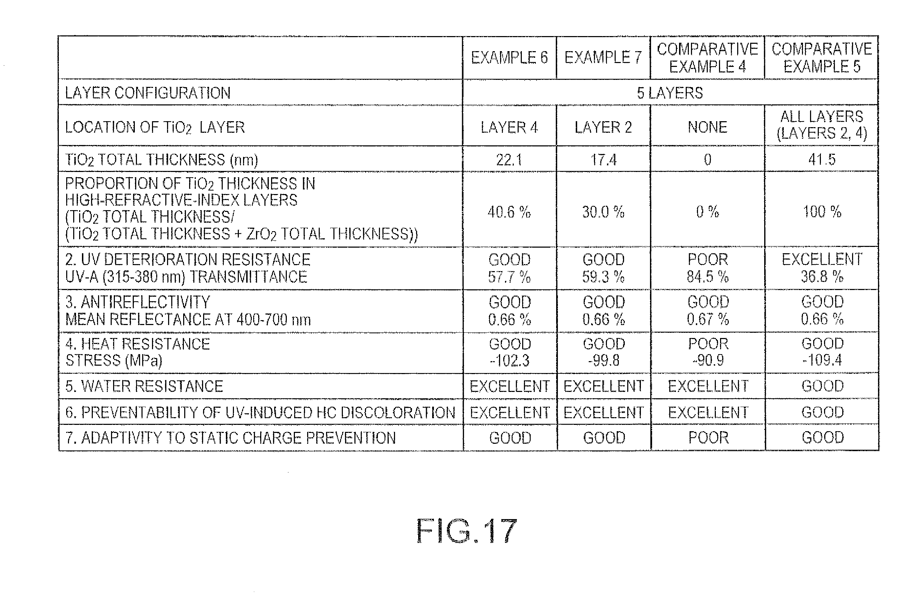

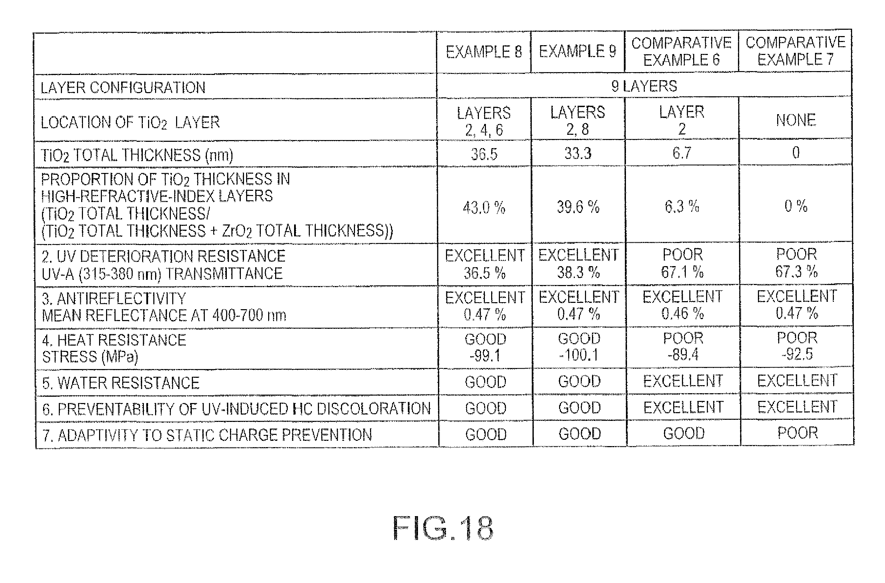

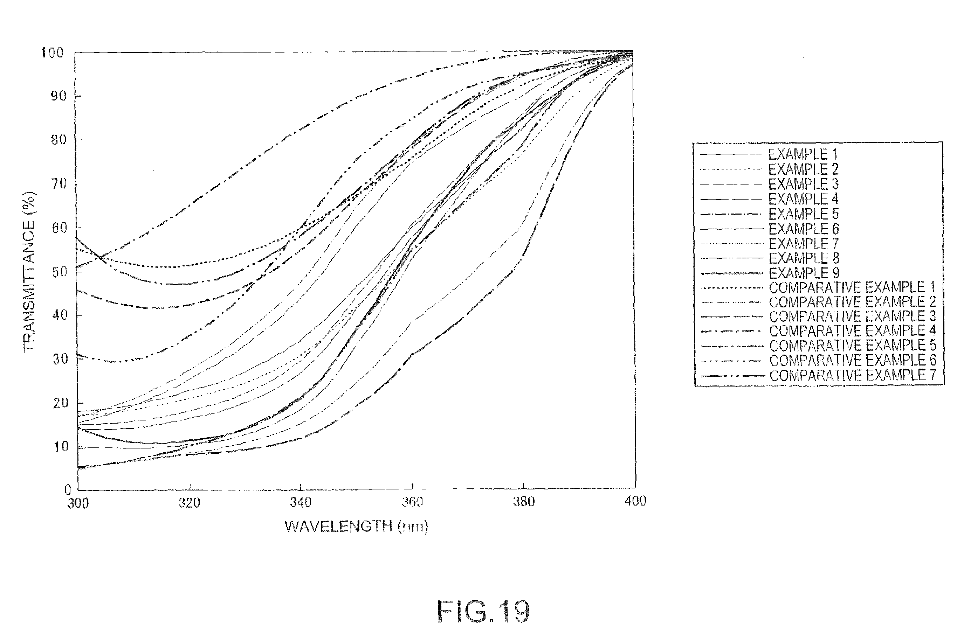

FIG. 16 to FIG. 18 present the mean transmittances, along with the evaluation results of each sample. FIG. 19 represents the results of transmittance calculations for each sample at different wavelengths.

The spectacle lens 10 includes the hardcoat (HC) layer 2 formed on the lens base material 1 to improve scratch resistance and the adhesion of the antireflection coating. As described above, the hardcoat layer 2 is a solid obtained by solidifying silica and titania particles (silica and titania sol) with resin (organic binder). Accordingly, the hardcoat layer 2 contains organic material (resin). The organic material may deteriorate under ultraviolet light, particularly under UV-A (wavelength: 315 nm to 380 nm). Thus, it would be possible to suppress detachment of the hardcoat layer 2 and the antireflection coating 3 and to provide a highly durable spectacle lens 10, if the passage of UV-A could be suppressed with the antireflection coating 3.

As presented in FIG. 16 to FIG. 18, the evaluation results were either good or excellent in samples S1 to S9 of Examples, and only minor detachment was observed in the hardcoat layer 2, if any. It was therefore found that samples S1 to S9 of Examples had desirable ultraviolet resistance. Further, the evaluation results were excellent in samples R3 and R5 of Comparative Examples, in which all of the high-refractive-index layers 3 were $TiO_2$ layers 62. On the other hand, the evaluation results were poor, and the ultraviolet resistance was low in samples R1, R2, R4, R6, and R7 of Comparative Examples, in which all of the high-refractive-index layers 3 were $ZrO_2$ layers 61, or the proportion P of the $TiO_2$ layer 62, if included, was less than 10%. It was therefore found that a lens 10 having scratch resistance and desirable ultraviolet resistance could be provided by satisfying the foregoing condition (1).

It is believed that these evaluation results correlate with the transmittances presented in FIG. 19, and with the UV-A mean transmittances presented in FIG. 16 to FIG. 18. From this, it can be said that the preferred UV-A mean transmittance is less than about 60%.

As the results demonstrate, while the $TiO_2$ layer 62 has lower UV-A mean transmittance than the $ZrO_2$ layer 61 and provides better ultraviolet resistance, the $ZrO_2$ layer 61 and the $TiO_2$ layer 62, when combined, can provide desirable ultraviolet resistance for the antireflection coating 3 and the lens 10.

It was also found that a lens 10 having desirable ultraviolet resistance could be obtained when the high-refractive-index layers include the $ZrO_2$ layer 61 as one of the layers and when the remaining layers are $TiO_2$ layers 62, without using a complex component system in which $ZrO_2$ and $TiO_2$ components are mixed, or in which a $ZrO_2$-$TiO_2$ hybrid is used for one of the high-refractive-index layers.

6.3 Antireflectivity

Reflectance was measured for each of the lens samples S1 to S9 and R1 to R7 to evaluate antireflectivity (antireflection characteristic). The measured reflectance values were then used to determine mean reflectance values in the visible light region (400 nm to 700 nm).

Evaluation criteria are as follows.

Excellent: Mean reflectance value is less than 0.5% in the visible light region

Good: Mean reflectance value is 0.5% or more and less than 1% in the visible light region

Poor: Mean reflectance value is 1% or more in the visible light region

Low reflection is required for the spectacle lens 10 in the whole visible light region (400 nm to 700 nm), and the antireflection coating 3 must satisfy this requirement. Cosmetically, it is desired to have about 1% reflectance near 510 nm wavelength to provide a green interference color.

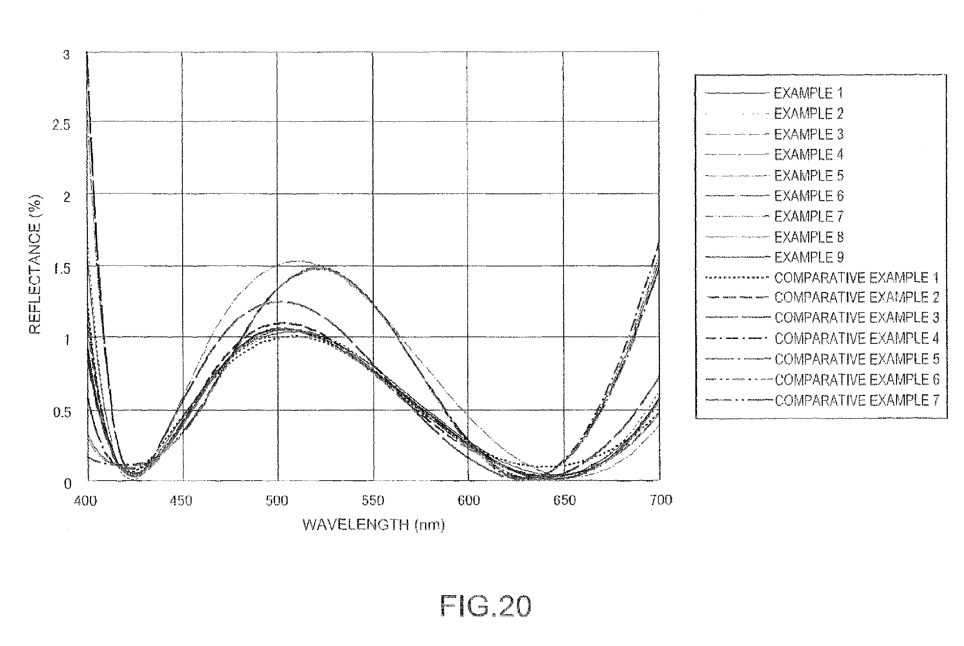

FIG. 16 to FIG. 18 present the evaluation results. FIG. 20 presents the results of reflection spectral characteristics calculations for samples S1 to S9 of Examples 1 to 9 and samples R1 to R7 of Comparative Examples 1 to 7. FIG. 16 to FIG. 18 also present the mean reflectance values in the visible light region (400 nm to 700 nm), along with the evaluation results.

The evaluation results were either good or excellent in samples S1 to S9 of Examples with the mean reflectance of less than 1%. It was also found that samples S1 to S9 all had reflectances of about 1% to 1.5% near 510 nm wavelength, and showed a green interference color. It was thus found to be possible to provide an antireflection coating 3 and a lens 10 that have not only desirable scratch resistance and ultraviolet resistance but desirable antireflectivity. The results also confirmed that an antireflection coating 3 and a lens 10 with desirable antireflectivity also could be obtained by combining the $ZrO_2$ layer 61 and the $TiO_2$ layer 62. It was thus found that a lens 10 having desirable antireflectivity could be obtained when the high-refractive-index layers include the $ZrO_2$ layer 61 as one of the layers and when the remaining layers are $TiO_2$ layers 62, without using a complex component system in which $ZrO_2$ and $TiO_2$ components are mixed, or in which a $ZrO_2$ -$TiO_2$ hybrid is used for one of the high-refractive-index layers.

6.4 Heat Resistance

Heat causes cracking in the antireflection coating for plastic spectacle lenses. The lens samples S1 to S9 and R1 to R7 were thus evaluated for heat resistance, specifically, resistance to cracking. Heat resistance was evaluated based on the state of cracking in the antireflection coating 3 left unattended under 60°C high-humidity conditions (condensing conditions) for extended time periods (160 hours).
The evaluation criteria are as follows.

Good: No cracking
Acceptable: Several cracks
Poor: Large numbers of cracks

FIG. 16 to FIG. 18 present the evaluation results. The evaluation results were good in all of samples S1 to S9 of Examples, and the heat resistance was desirable. Good evaluation results and desirable heat resistance were also obtained in samples R3 and R5 of Comparative Examples in which all of the high-refractive-index layers were $TiO_2$ layers 62. However, the evaluation results were poor or acceptable, and the heat resistance was low in samples R1, R2, R4, R6, and R7 of Comparative Examples in which all of the high-refractive-index layers were $ZrO_2$ layers 61, or in which the proportion P of the $TiO_2$ layer 62, if included, was less than 10%. It was therefore found that an antireflection coating 3 and a lens 10 that have not only desirable scratch resistance, ultraviolet resistance, and antireflectivity but desirable heat resistance could be obtained by satisfying the foregoing condition (1).
One possible cause of cracking is the large difference, by about two order of magnitude, in the linear coefficients of expansion of the plastic spectacle lens base material 1 and the material of the antireflection coating 3, because it makes the antireflection coating 3 unable to withstand the linear expansion of the lens base material 1 (see JP-A-2009-217018). It is considered possible to increase heat resistance by giving an appropriate compressional stress to the antireflection coating 3. In the antireflection coating 3 of a multilayer structure, the stress of the whole multilayer film (whole antireflection coating 3) can be calculated by determining the component ratio of each material in the multilayer film, multiplying each component ratio by the monolayer film stress, and adding the products.

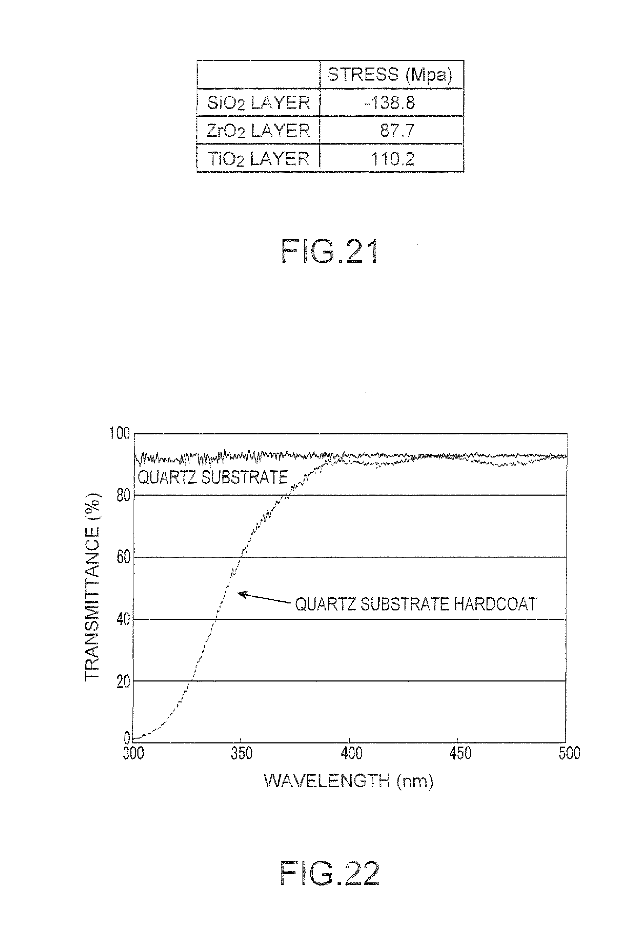

FIG. 21 presents typical stress values of the layers in the antireflection coating 3 formed by a vacuum vapor deposition method. The stress of the multilayer antireflection coating 3 can be determined according to the equation (4) below. FIG. 16 to FIG. 18 present the stress value calculated for the antireflection coating 3 of each sample. The coefficients were determined by experiment from the stress of the monolayer film of each material.

```
Equation (4)

      Stress of multilayer antireflection coating 3 = proportion of  sum  of  the  thickness(es)  of  SiO₂  layer  63  ×  (-138.8)  +

  proportion of sum of the thickness(es) of ZrO₂ layer 61 × 87.7 +

  proportion of sum of the thickness(es) of TiO₂ layer 62 × 110.2
```

In the equation, the proportion of $SiO_2$ layer sum of the thickness(es) = the sum of the thicknesses of the $SiO_2$ layers 63 (sum of the thickness (es)) / sum of the thickness (es) of antireflection coating 3 (Equation 4-1), the proportion of $ZrO_2$ layer sum of the thickness(es) = the sum of the thicknesses of the $ZrO_2$ layers 61 (sum of the thickness(es)) T1T/ sum of the thickness(es) of antireflection coating 3 (Equation 4-2), and the proportion of $TiO_2$ layer sum of the thickness(es) = the sum of the thicknesses of the $TiO_2$ layers 62 (sum of the thickness(es)) T2T/ sum of the thickness (es) of antireflection coating 3 (Equation 4-3).
It can be seen from the correlation between the stress of the antireflection coating 3 and the evaluation results for stress and cracking presented in FIG. 16 to FIG. 18 that an antireflection coating 3 and a lens 10 that hardly generate cracking and have high heat resistance can be provided when the stress of the antireflection coating 3 is about -98 MPa or less (compressional stress of 98 MPa or less). Generally, an antireflection coating including a high-refractive-index $TiO_2$ layer 62 (refractive index of 2.431 at 550 nm wavelength) is evaluated as having higher heat resistance than an antireflection coating that includes the $ZrO_2$ layer 61 (refractive index of 2.05 at 550 nm wavelength). However, the foregoing results revealed that an antireflection coating 3 and a lens 10 having desirable heat resistance could be obtained by combining the $ZrO_2$ layer 61 and the $TiO_2$ layer 62. It was also found that an antireflection coating 3 and a lens 10 having desirable heat resistance could be obtained when the high-refractive-index layers include the $ZrO_2$ layer 61 as one of the layers and when the remaining layers are $TiO_2$ layers 62, without using a complex component system in which $ZrO_2$ and $TiO_2$ components are mixed, or in which a $ZrO_2$-$TiO_2$ hybrid is used for one of the high-refractive-index layers.

6.5 Water Resistance (Moisture Resistance, Swelling)

water resistance (moisture resistance) was evaluated by a constant temperature and humidity environment test. Specifically, lens samples S1 to S9 and R1 to R7 were left unattended in a constant temperature and humidity environment (60°C, 98% RH) for 8 days, and the surface reflected light on the front or back surface was observed to evaluate water resistance (swelling).

Specifically, the fluorescence reflected light at the convex face of each sample was observed. The evaluation results were deemed excellent (no swelling) when the fluorescence reflected light image had a clear contour. The results were deemed good (some swelling is observed but at acceptable levels) when the fluorescence reflected light image had a measurably blur or hazy contour. The results were deemed poor (unacceptable levels of swelling) when the contour of the fluorescence reflected light image had unacceptable levels of blur or haze.

FIG. 16 to FIG. 18 present the evaluation results. The evaluation results were either good or excellent in samples S1 to S9 of Examples, and the water resistance was desirable. Swelling occurs when the Antireflection coating 3 has low moisture permeability. Specifically, swelling is highly dependent on the material of the antireflection coating 3. It is known empirically that antireflection coatings including a $ZrO_2$ layer have little or no swelling (see Comparative Examples 1, 2, 4, and 7), whereas swelling easily occurs in antireflection coatings that include a $TiO_2$ layer, a $Ta_2O_5$ layer, and an ITO layer (see Comparative Example 3). Swelling becomes particularly prominent when a dense layer is deliberately formed by ion-assisted vapor deposition. This is considered to be due to the trapping of moisture underneath the dense layer that has even lower moisture permeability. Further, moisture increases (by being trapped) near the interface between the hardcoat layer 2 and the antireflection coating 3 in a swelling-causing environment. This is problematic as it facilitates detachment of the antireflection coating 3 and other layers.

However, it was found from the foregoing results that an antireflection coating 3 and a lens 10 having desirable water resistance could be obtained by combining the $ZrO_2$ layer 61 and the $TiO_2$ layer 62. It was also found that an antireflection coating 3 and a lens 10 having desirable water resistance could be obtained when the high-refractive-index layers include the $ZrO_2$ layer 61 as one of the layers and when the remaining layers are $TiO_2$ layers 62, without using a complex component system in which $ZrO_2$ and $TiO_2$ components are mixed, or in which a $ZrO_2$-$TiO_2$ hybrid is used for one of the high-refractive-index layers. The foregoing results thus demonstrated that an antireflection coating 3 and a lens 10 could be obtained that have not only desirable scratch resistance, ultraviolet resistance, antireflectivity, and heat resistance, but desirable water resistance.

It was also found from the foregoing evaluation results that swelling could be suppressed when the proportion P of the $TiO_2$ layer 62 was 90% or less, and/or when the sum of the thickness(es) of the $TiO_2$ layer 62 (the sum of the thicknesses) T2T was 45 nm or less, even when the $TiO_2$ layer 62 was used as the high-refractive-index layer 32.

6.6 Preventability of UV-Induced Discoloration of Hardcoat Layer

Lens samples S1 to S9 and R1 to R7 were evaluated for discoloration of the hardcoat layer 2 in a 20-hour test conducted at a 75 W/m$^2$ illuminance using a xenon weather meter (Suga Test Instruments Co., Ltd.). The evaluation criteria are as follows.

    Excellent: No discoloration in hardcoat layer
    Good: Some discoloration in hardcoat layer but at acceptable levels
    Poor: Unacceptable levels of discoloration in hardcoat layer

FIG. 16 to FIG. 18 present the evaluation results. The evaluation results were either good or excellent in all of samples S1 to S9 of Examples, and the discoloration of the hardcoat layer 2 was found to be desirably suppressed. The evaluation results were poor in sample R3 of Comparative Example in which all of the high-refractive-index layers were

$TiO_2$ layers, and discoloration easily occurred in the hardcoat layer 2.

There are reports that the hardcoat (HC) layer 2 undergoes discoloration under ultraviolet light (UV). Concerning the ultraviolet light and near-ultraviolet light transmittance, the $Ti-O_2$ layer 62 has lower UV-A mean transmittance than the $ZrO_2$ layer 61 and thus provides desirable ultraviolet resistance, and an antireflection coating 3 and a lens 10 having desirable ultraviolet resistance can be obtained by combining the $ZrO_2$ layer 61 and the $TiO_2$ layer 62, as described in section 6.2 above. Thus, as one might expect, sample R3 of Comparative Example using the $TiO_2$ layers for all of the high-refractive-index layers, having low UV-A transmittance could prevent the UV-induced discoloration of the hardcoat layer 2. However, the actual evaluation result was poor.

It was therefore found that an antireflection coating 3 and a lens 10 with desirable discoloration preventability (suppressed discoloration) could be obtained by combining the $ZrO_2$ layer 61 and the $TiO_2$ layer 62. It was also found that an antireflection coating 3 and a lens 10 having desirable discoloration preventability could be obtained when the high-refractive-index layers include the $ZrO_2$ layer 61 as one of the layers and when the remaining layers are $TiO_2$ layers 62, without using a complex component system in which $ZrO_2$ and $TiO_2$ components are mixed, or in which a $ZrO_2$-$TiO_2$ hybrid is used for one of the high-refractive-index layers. The foregoing results thus demonstrated that an antireflection coating 3 and a lens 10 could be obtained that have not only desirable scratch resistance, ultraviolet resistance, antireflectivity, heat resistance, and water resistance, but desirable discoloration preventability.

The discoloration of the hardcoat layer 2 appears to involve the following mechanism. Titania fine particles (titania sol) are used as the material of the hardcoat layer 2. The titania used for this purpose is generally of an anatase type or a rutile type. The bandgaps of the anatase type and rutile type are 3.0 eV and 3.2 eV, respectively. The appearance of the blue color is thus considered to be due to the absorption of light with 400 nm or lower wavelengths, specifically ultraviolet light, by the titania.

FIG. 22 represents the relationship between wavelength and transmittance (spectral transmittance) for a quartz substrate and for the hardcoat layer 2 formed on a quartz substrate. In the hardcoat layer 2 formed on a quartz substrate, optical absorption occurs at 400 nm or less and the transmittance declines. This ultraviolet light may discolor the titania in the hardcoat layer. The titania in the hardcoat layer often appears blue or grey. These colors are due to about 2% to 4% optical absorption that occurs over the whole visible light region.

The cause of titania discoloration is believed to be the generation of oxygen losses in the titania ($TiO_2$). The generation of oxygen losses in the titania ($TiO_2$) shifts the absorption edge toward the visible light side, and produces a color by the development of visible light activity. The extent of oxygen loss is represented by the O/Ti value (O/Ti molar ratio) in $TiO_2$,

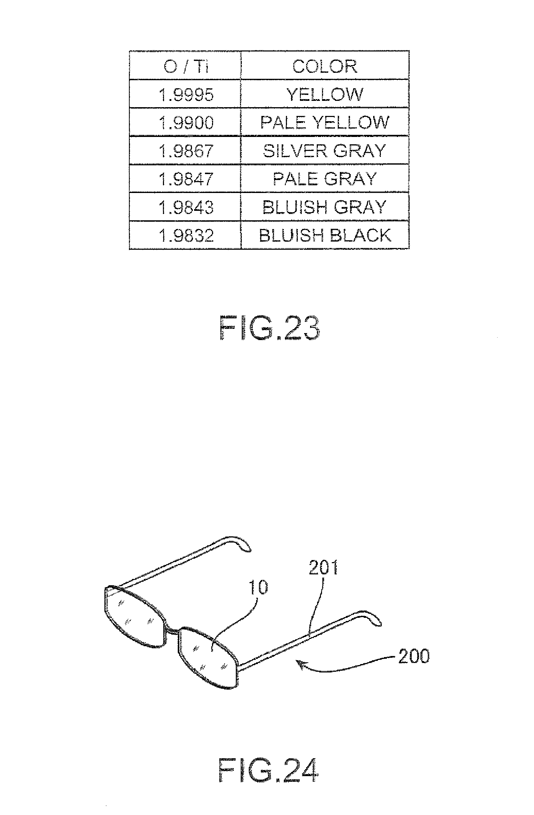

FIG. 23 presents the colors of oxygen loss-type rutile $TiO_2$ samples having different O/Ti molar ratios. As can be seen in FIG. 23, lowering the O/Ti molar ratio changes the color from yellow (pale yellow) to bluish black, as reported in The Development of a Novel Producing Method for High-Performance Visible Light-Type Titanium Dioxide Photocatalyst presented at Kagawa Research Center for Industrial Science & Technology, June 22, 2007 (Chen Zai-hua, Kanac Co., Ltd.; Yang Wei-ping, Research Institute for Solvothermal Technology).

It is known empirically that the discoloration of the hardcoat layer 2 occurring in a spectacle lens under ultraviolet light does not occur or is unlikely to occur in the presence of moisture around the titania. Because the discoloration is believed to be caused by the oxygen losses generated in the hardcoat layer 2 under ultraviolet light, the presence of moisture around titania is believed to suppress the generation of oxygen losses in the titania in such a way that discoloration does not occur or is unlikely to occur. Thus, in a spectacle lens, discoloration can be suppressed if an antireflection coating 3 that has sufficient water permeability and does not easily pass ultraviolet light could be formed on the hardcoat layer 2. However, while the $TiO_2$ layer 62 is capable of suppressing passage of ultraviolet light, the $TiO_2$ layer 62 has low water permeability. The $ZrO_2$ layer 61, on the other hand, has water permeability, but poorly absorbs ultraviolet light.

It was found, however, that an antireflection coating 3 having low ultraviolet light passage and desirable water permeability, capable of suppressing the discoloration of the hardcoat layer 2 could be obtained by combining the $ZrO_2$ layer 61 and the $TiO_2$ layer 62.

6.7 Antistatic Performance

Lens samples S1 to S9 and R1 to R7 were evaluated for antistatic property. The evaluation criteria are as follows.

Good: Easily adaptive to static charge prevention
Poor: Not easily adaptive to static charge prevention

Studies by the present inventors have found that a surface conduction treatment is possible if the $TiO_2$ layer were included, and that the surface resistance could be lowered. Thus, as presented in FIG. 16 to FIG. 18, all of the samples S1 to S9 of Examples are easily adaptive to static charge prevention (antistatic performance can be easily obtained), and thus have good evaluation results.

It was therefore found that an antireflection coating 3 and a lens 10 with desirable antistatic property (antistatic function) could be obtained by combining the $ZrO_2$ layer 61 and the $TiO_2$ layer 62. It was also found that an antireflection coating 3 and a lens 10 having desirable antistatic property could be obtained when the high-refractive-index layers include the $ZrO_2$ layer 61 as one of the layers and when the remaining layers are $TiO_2$ layers 62, without using a complex component system in which $ZrO_2$ and $TiO_2$ components are mixed, or in which a $ZrO_2$-$TiO_2$ hybrid is used for one of the high-refractive-index layers. The foregoing results thus demonstrated that an antireflection coating 3 and a lens 10 could be obtained that have not only desirable scratch resistance, ultraviolet resistance, antireflectivity, heat resistance, water resistance, and discoloration preventability, but desirable antistatic property.

For antistatic performance, it is important in a spectacle lens that the lens have a surface electrical resistance of $1 \times 10^{11}$ $\Omega$ or less. In the related art, the surface electrical resistance is lowered with the antireflection coating configured to include ITO. The antireflection coating including the ITO layer is realized by, for example, using the ITO layer as a high-refractive-index layer, or by forming the ITO layer between the high-refractive-index layer and the low-refractive-index layer. However, ITO-free spectacle lenses are needed in view of problems such as the high prices of indium (In), exhaustible resources, and durability against acid.

Further, the configuration including the ITO layer between the high-refractive-index layer and the low-refractive-index layer makes the system complex with the additional layer formed in the multilayer antireflection coating. This is problematic as it increases the production time. Further, the ITO layer has low moisture permeability, and is likely to cause swelling. Thus, the configuration including the ITO layer in the antireflection may cause swelling or may discolor the hardcoat layer. The lens 10 of the embodiments above, on the other hand, includes the $TiO_2$ layer 62 subjected to a surface conduction treatment to provide antistatic property. This is advantageous because the ITO can be omitted, and no new film design needs to be made with the ITO.

7. Comprehensive Evaluations of Samples S1 to S9 and R1 to R7

As the foregoing results demonstrate, the samples S1 to S9 of Examples all have desirable scratch resistance, ultraviolet resistance, antireflectivity, heat resistance, water resistance, discoloration preventability, and antistatic property. Sample S2 of Example 2 is particularly superior in terms of scratch resistance, water resistance, and resistance to UV-induced discoloration of hardcoat layer, compared with the samples of the other Examples. Thus, it can be said that sample S2 of Example 2 represents a particularly desirable sample among the samples of Examples.

Accordingly, the lens 10 (10a, 10b, 10c) of the foregoing embodiments has desirable antireflection characteristics, heat resistance, water resistance, antistatic performance, and electromagnetic shielding performance, and does not easily deteriorate under ultraviolet light and can thus suppress discoloration of the hardcoat layer.

Note that the layer structures of the antireflection coating described above are merely examples, and the invention is not limited to these layer structures. For example, the invention is also applicable to an antireflection coating including 11 layers or more.

Eyeglasses represent an example of the article (product) or system that includes the optical article (lens) 10. FIG. 24 illustrates eyeglasses 200 that include a spectacle lens 10 provided with the antireflection coating 3, and a frame 201 to which the spectacle lens 10 is attached.

Even though the foregoing described the eyeglass lens as an example of optical articles, the invention is not limited to eyeglass lenses. One other aspect of the invention is a system that includes the optical article, and an apparatus that projects and/or acquires images through the optical article. A typical example of the system that includes an apparatus for projection purposes is a projector. In this case, the optical article is typically, for example, a projection lens, a dichroic prism, or a cover glass. The technique described herein is also applicable to the light valve and other elements of LCDs (liquid crystal devices), an example of an image forming apparatus. The technique is also applicable to a system, such as a camera, used to acquire images through an optical article. In this case, the optical article is typically, for example, an imaging lens, or a cover glass. Further, the technique also can be used for imaging devices such as CCD. The technique is also applicable to an information recording apparatus that accesses the information source through an optical article such as DVD.

**Claims**

1. An optical article (10, 10a, 10b) that comprises an antireflection coating (3) formed on an optical base material (1) either directly or via some other layer,

   the antireflection coating (3) being configured from alternately laminated n + 1 low-refractive-index layers (31) and n high-refractive-index layers (32) (where n is an integer of 2 or more),
   at least one of the n high-refractive-index layers (32) being a first-type layer (61) formed by vapor deposition using only a first deposition source (113a) that includes zirconium oxide as the main component, the remaining layer(s) in the n high-refractive-index layers (32) being a second-type layer(s) (62) formed by vapor deposition using only a second deposition source (113b) that includes titanium oxide as the main component, the n + 1 low-refractive-index layers (31) being third-type layers (63) formed by vapor deposition using only a third deposition source (112a) that includes silicon oxide as the main component, and

the proportion of the sum of the thickness(es) of the second-type layer(s) (62) to the sum of the thicknesses of the n high-refractive-index layers (32) being from 15% to 90%.

2. An optical article (10, 10a, 10b) that comprises an antireflection coating (3) formed on an optical base material (1) either directly or via some other layer,

the antireflection coating (3) being configured from alternately laminated n + 1 low-refractive-index layers (31) and n high-refractive-index layers (32) (where n is an integer of 2 or more),

at least one of the n high-refractive-index layers (32) being a zirconium oxide layer, as a first-type layer (61), the remaining layer(s) in the n high-refractive-index layers (32) each being a titanium oxide layer as a second-type layer (62), the n + 1 low-refractive-index layers (31) being silicon oxide layers (63), as third-type layers, and

the proportion of the sum of the thickness(es) of the second-type layer(s) (62) to the sum of the thicknesses of the n high-refractive-index layers (32) being from 15% to 90%.

3. The optical article (10, 10a, 10b) according to claim 1 or 2, wherein the proportion is from 20% to 60%.

4. The optical article (10, 10a, 10b) according to any one of claims 1 to 3, wherein the sum of the thickness (es) of the second-type layer(s) (62) is from 15 nm to 45 nm.

5. The optical article (10, 10a, 10b) according to any one of claims 1 to 4, wherein a surface of at least one of the second-type layers (62) has been subjected to a conduction treatment.

6. The optical article (10, 10a, 10b) according to any one of claims 1 to 5, further comprising a hardcoat layer (2) that contains titanium dioxide and is formed between the optical base material (1) and the antireflection coating (3).

7. The optical article (10, 10a, 10b) according to any one of claims 1 to 6, wherein n is 2, 3, or 4.

8. The optical article (10, 10a, 10b) according to any one of claims 1 to 7, wherein the optical base material (1) is a plastic lens base material.

9. The optical article (10, 10a, 10b) according to any one of claims 1 to 8, wherein the optical article (10, 10a, 10b) is a spectacle lens.

10. A method for producing an optical article (10, 10a, 10b) that includes an antireflection coating (3) formed on an optical base material (1) either directly or via some other layer,

the antireflection coating (3) being configured from alternately laminated n + 1 low-refractive-index layers (31) and n high-refractive-index layers (32) (where n is an integer of 2 or more),

at least one of the n high-refractive-index layers (32) being a first-type layer (61) that includes zirconium oxide as the main component, the remaining layer(s) in the n high-refractive-index layers (32) being a second-type layer(s) (62) that includes titanium oxide as the main component, the n + 1 low-refractive-index layers (31) being third-type layers (63) that include silicon oxide as the main component, and

the proportion of the sum of the thickness(es) of the second-type layer(s) (62) to the sum of the thicknesses of the n high-refractive-index layers (32) being from 15% to 90%,

the method comprising:

forming the first-type layer (61) by vapor deposition using only a first deposition source (113a) that includes zirconium oxide as the main component; and

forming the second-type layer (62) by vapor deposition using only a second deposition source (113b) that includes titanium oxide as the main component.

11. The method according to claim 10, further comprising performing a conduction treatment for a surface of at least one of the second-type layers (62).

FIG. 1

START

VAPOR DEPOSIT
LOW-REFRACTIVE-INDEX
LAYER USING ONLY THIRD
DEPOSITION SOURCE — 51

SELECT FIRST OR SECOND
DEPOSITION SOURCE — 52

VAPOR DEPOSIT
HIGH-REFRACTIVE-INDEX
LAYER USING ONLY SELECTED
DEPOSITION SOURCE — 53

CONDUCTION
TREATMENT NEEDED? 54    N

Y

CONDUCTION
TREATMENT — 55

VAPOR DEPOSIT
LOW-REFRACTIVE-INDEX
LAYER USING ONLY THIRD
DEPOSITION SOURCE — 56

N    DEPOSITION
FINISHED? 57

Y

END

FIG. 2

FIG. 3

| | | EXAMPLE 1 | | EXAMPLE 2 | | EXAMPLE 3 | | EXAMPLE 4 | | EXAMPLE 5 | |
|---|---|---|---|---|---|---|---|---|---|---|---|
| BASE MATERIAL | | SEIKO EPSON SUPER SOVEREIGN | | SEIKO EPSON SUPER SOVEREIGN | | SEIKO EPSON SUPER SOVEREIGN | | SEIKO EPSON SUPER SOVEREIGN | | SEIKO EPSON SUPER SOVEREIGN | |
| HARDCOAT LAYER | | MAIN COMPONENT | LAYER THICKNESS (nm) | MAIN COMPONENT | LAYER THICKNESS (nm) | MAIN COMPONENT | LAYER THICKNESS (nm) | MAIN COMPONENT | LAYER THICKNESS (nm) | MAIN COMPONENT | LAYER THICKNESS (nm) |
| HARDCOAT LAYER | | SOLID OF SILICA AND TITANIA SOL SOLIDIFIED WITH RESIN | 1000~3000 | SOLID OF SILICA AND TITANIA SOL SOLIDIFIED WITH RESIN | 1000~3000 | SOLID OF SILICA AND TITANIA SOL SOLIDIFIED WITH RESIN | 1000~3000 | SOLID OF SILICA AND TITANIA SOL SOLIDIFIED WITH RESIN | 1000~3000 | SOLID OF SILICA AND TITANIA SOL SOLIDIFIED WITH RESIN | 1000~3000 |
| ANTIREFLECTION COATING | | MAIN COMPONENT | LAYER THICKNESS (nm) | MAIN COMPONENT | LAYER THICKNESS (nm) | MAIN COMPONENT | LAYER THICKNESS (nm) | MAIN COMPONENT | LAYER THICKNESS (nm) | MAIN COMPONENT | LAYER THICKNESS (nm) |
| ANTIREFLECTION COATING | FIRST LAYER | $SiO_2$ | 29.6 | $SiO_2$ | 29.5 | $SiO_2$ | 27.9 | $SiO_2$ | 28.0 | $SiO_2$ | 29.9 |
| ANTIREFLECTION COATING | SECOND LAYER | $ZrO_2$ | 9.3 | $ZrO_2$ | 9.8 | $TiO_2$ | 5.4 | $TiO_2$ | 5.4 | $ZrO_2$ | 9.6 |
| ANTIREFLECTION COATING | THIRD LAYER | $SiO_2$ | 209.8 | $SiO_2$ | 208.7 | $SiO_2$ | 201.4 | $SiO_2$ | 202.8 | $SiO_2$ | 209.9 |
| ANTIREFLECTION COATING | FOURTH LAYER | $TiO_2$ ※ | 19.1 | $ZrO_2$ | 40.0 | $TiO_2$ ※ | 19.2 | $ZrO_2$ | 35.4 | $TiO_2$ | 21.0 |
| ANTIREFLECTION COATING | FIFTH LAYER | $SiO_2$ | 34.0 | $SiO_2$ | 29.3 | $SiO_2$ | 32.7 | $SiO_2$ | 33.6 | $SiO_2$ | 42.8 |
| ANTIREFLECTION COATING | SIXTH LAYER | $ZrO_2$ | 44.8 | $TiO_2$ ※ | 26.1 | $ZrO_2$ | 45.6 | $TiO_2$ ※ | 24.2 | $TiO_2$ ※ | 23.7 |
| ANTIREFLECTION COATING | SEVENTH LAYER | $SiO_2$ | 101.6 | $SiO_2$ | 101.5 | $SiO_2$ | 100.1 | $SiO_2$ | 102.3 | $SiO_2$ | 106.1 |
| ANTIREFLECTION COATING | TOTAL THICKNESS (nm) | 448.1 | | 444.9 | | 432.3 | | 431.8 | | 442.9 | |
| ANTIREFLECTION COATING | $SiO_2$ TOTAL THICKNESS (nm) | 375.0 | | 368.9 | | 362.2 | | 366.8 | | 388.7 | |
| ANTIREFLECTION COATING | $ZrO_2$ TOTAL THICKNESS (nm) | 54.1 | | 49.8 | | 45.6 | | 35.4 | | 9.6 | |
| ANTIREFLECTION COATING | $TiO_2$ TOTAL THICKNESS (nm) | 19.1 | | 26.1 | | 24.6 | | 29.6 | | 44.7 | |
| ANTIFOULING LAYER | | FLUORO THIN FILM | | FLUORO THIN FILM | | FLUORO THIN FILM | | FLUORO THIN FILM | | FLUORO THIN FILM | |

FIG. 4

| | | COMPARATIVE EXAMPLE 1 | | COMPARATIVE EXAMPLE 2 | | COMPARATIVE EXAMPLE 3 | |
|---|---|---|---|---|---|---|---|
| BASE MATERIAL | | SEIKO EPSON SUPER SOVEREIGN | | SEIKO EPSON SUPER SOVEREIGN | | SEIKO EPSON SUPER SOVEREIGN | |
| HARDCOAT LAYER | | MAIN COMPONENT | LAYER THICKNESS (nm) | MAIN COMPONENT | LAYER THICKNESS (nm) | MAIN COMPONENT | LAYER THICKNESS (nm) |
| HARDCOAT LAYER | | SOLID OF SILICA AND TITANIA SOL SOLIDIFIED WITH RESIN | 1000~3000 | SOLID OF SILICA AND TITANIA SOL SOLIDIFIED WITH RESIN | 1000~3000 | SOLID OF SILICA AND TITANIA SOL SOLIDIFIED WITH RESIN | 1000~3000 |
| ANTIREFLECTION COATING | | MAIN COMPONENT | LAYER THICKNESS (nm) | MAIN COMPONENT | LAYER THICKNESS (nm) | MAIN COMPONENT | LAYER THICKNESS (nm) |
| ANTIREFLECTION COATING | FIRST LAYER | $SiO_2$ | 33.0 | $SiO_2$ | 28.85 | $SiO_2$ | 31.3 |
| ANTIREFLECTION COATING | SECOND LAYER | $ZrO_2$ | 9.0 | $TiO_2$ ※ | 5 | $TiO_2$ | 6.0 |
| ANTIREFLECTION COATING | THIRD LAYER | $SiO_2$ | 220.0 | $SiO_2$ | 203 | $SiO_2$ | 215.4 |
| ANTIREFLECTION COATING | FOURTH LAYER | $ZrO_2$ | 32.0 | $ZrO_2$ | 35.58 | $TiO_2$ | 23.2 |
| ANTIREFLECTION COATING | FIFTH LAYER | $SiO_2$ | 29.0 | $SiO_2$ | 22.41 | $SiO_2$ | 37.6 |
| ANTIREFLECTION COATING | SIXTH LAYER | $ZrO_2$ | 44.0 | $ZrO_2$ | 49.34 | $TiO_2$ ※ | 26.9 |
| ANTIREFLECTION COATING | SEVENTH LAYER | $SiO_2$ | 100.0 | $SiO_2$ | 96.25 | $SiO_2$ | 103.8 |
| ANTIREFLECTION COATING | TOTAL THICKNESS (nm) | 467.0 | | 440.4 | | 444.2 | |
| ANTIREFLECTION COATING | $SiO_2$ TOTAL THICKNESS (nm) | 382.0 | | 350.5 | | 388.1 | |
| ANTIREFLECTION COATING | $ZrO_2$ TOTAL THICKNESS (nm) | 85.0 | | 84.9 | | 0 | |
| ANTIREFLECTION COATING | $TiO_2$ TOTAL THICKNESS (nm) | 0 | | 5.0 | | 56.1 | |
| ANTIFOULING LAYER | | FLUORO THIN FILM | | FLUORO THIN FILM | | FLUORO THIN FILM | |

FIG. 5

DEPOSITION CONDITIONS
(VAPOR DEPOSITION CONDITIONS)

| | MATERIAL (VAPOR DEPOSITION SOURCE) 112a | ELECTRON BEAM HEATING CONDITIONS | ION ASSIST | FLOWN GAS INTO CHAMBER |
|---|---|---|---|---|
| 63 SiO$_2$ LAYER | SiO$_2$ PARTICLES | 6kV, 100mA | ABSENT | ARGON : 5sccm |
| 61 ZrO$_2$ LAYER | TABLET (ZrO$_2$ SINTERED BODY) 113a | 6kV, 280mA | PRESENT MIXED BEAM OF ARGON AND OXYGEN 600V, 150mA | ABSENT |
| 62 TiO$_2$ LAYER | TiO$_{1.7}$ GRANULES 113b | 6kV, 320mA | PRESENT OXYGEN BEAM 500V, 150mA | OXYGEN : 15sccm |

CONDUCTION TREATMENT CONDITIONS:
BOMBARDMENT OF TiO$_2$ LAYER SURFACE WITH MIXED ION BEAM OF ARGON AND OXYGEN
(ACCELERATION VOLTAGE 800V, ION BEAM CURRENT 200mA, IRRADIATION TIME 2MIN)

FIG. 6

FIG. 7A

SiO₂ — 63 / 31

TiO₂ — 62 / 32

FIG. 7B

SiO₂ — 63 / 31

TiO₂ — 62 / 32

Ar GAS + O₂ GAS ION BEAM

FIG. 7C

SiO₂ — 63 / 31

TiO₂ — 62 / 32

SiO₂ — 63 / 31

FIG. 8

| | | EXAMPLE 6 | | EXAMPLE 7 | | COMPARATIVE EXAMPLE 4 | | COMPARATIVE EXAMPLE 5 | |
|---|---|---|---|---|---|---|---|---|---|
| BASE MATERIAL | | SEIKO EPSON SUPER SOVEREIGN | | SEIKO EPSON SUPER SOVEREIGN | | SEIKO EPSON SUPER SOVEREIGN | | SEIKO EPSON SUPER SOVEREIGN | |
| HARDCOAT LAYER | | MAIN COMPONENT | LAYER THICKNESS (nm) | MAIN COMPONENT | LAYER THICKNESS (nm) | MAIN COMPONENT | LAYER THICKNESS (nm) | MAIN COMPONENT | LAYER THICKNESS (nm) |
| | | SOLID OF SILICA AND TITANIA SOL SOLIDIFIED WITH RESIN | 1000~3000 | SOLID OF SILICA AND TITANIA SOL SOLIDIFIED WITH RESIN | 1000~3000 | SOLID OF SILICA AND TITANIA SOL SOLIDIFIED WITH RESIN | 1000~3000 | SOLID OF SILICA AND TITANIA SOL SOLIDIFIED WITH RESIN | 1000~3000 |
| ANTIREFLECTION COATING | | MAIN COMPONENT | LAYER THICKNESS (nm) | MAIN COMPONENT | LAYER THICKNESS (nm) | MAIN COMPONENT | LAYER THICKNESS (nm) | MAIN COMPONENT | LAYER THICKNESS (nm) |
| | FIRST LAYER | $SiO_2$ | 164.1 | $SiO_2$ | 161.6 | $SiO_2$ | 159.9 | $SiO_2$ | 166.3 |
| | SECOND LAYER | $ZrO_2$ | 32.3 | $TiO_2$ ※ | 17.4 | $ZrO_2$ | 31.6 | $TiO_2$ | 18.7 |
| | THIRD LAYER | $SiO_2$ | 34.4 | $SiO_2$ | 33.9 | $SiO_2$ | 25.7 | $SiO_2$ | 41 |
| | FOURTH LAYER | $TiO_2$ ※ | 22.1 | $ZrO_2$ | 41.4 | $ZrO_2$ | 42.7 | $TiO_2$ ※ | 22.9 |
| | FIFTH LAYER | $SiO_2$ | 98.7 | $SiO_2$ | 97.3 | $SiO_2$ | 91.8 | $SiO_2$ | 102.9 |
| | TOTAL THICKNESS (nm) | 351.7 | | 351.5 | | 351.6 | | 351.7 | |
| | $SiO_2$ TOTAL THICKNESS (nm) | 297.2 | | 292.7 | | 277.3 | | 310.2 | |
| | $ZrO_2$ TOTAL THICKNESS (nm) | 32.3 | | 41.4 | | 74.3 | | 0 | |
| | $TiO_2$ TOTAL THICKNESS (nm) | 22.1 | | 17.4 | | 0 | | 41.5 | |
| ANTIFOULING LAYER | | FLUORO THIN FILM | | FLUORO THIN FILM | | FLUORO THIN FILM | | FLUORO THIN FILM | |

FIG. 9

FIG.10

| | | EXAMPLE 8 | | EXAMPLE 9 | | COMPARATIVE EXAMPLE 6 | | COMPARATIVE EXAMPLE 7 | |
|---|---|---|---|---|---|---|---|---|---|
| BASE MATERIAL | | SEIKO EPSON SUPER SOVEREIGN | | SEIKO EPSON SUPER SOVEREIGN | | SEIKO EPSON SUPER SOVEREIGN | | SEIKO EPSON SUPER SOVEREIGN | |
| HARDCOAT LAYER | | MAIN COMPONENT | LAYER THICKNESS (nm) | MAIN COMPONENT | LAYER THICKNESS (nm) | MAIN COMPONENT | LAYER THICKNESS (nm) | MAIN COMPONENT | LAYER THICKNESS (nm) |
| | | SOLID OF SILICA AND TITANIA SOL SOLIDIFIED WITH RESIN | 1000~3000 | SOLID OF SILICA AND TITANIA SOL SOLIDIFIED WITH RESIN | 1000~3000 | SOLID OF SILICA AND TITANIA SOL SOLIDIFIED WITH RESIN | 1000~3000 | SOLID OF SILICA AND TITANIA SOL SOLIDIFIED WITH RESIN | 1000~3000 |
| ANTIREFLECTION COATING | | MAIN COMPONENT | LAYER THICKNESS (nm) | MAIN COMPONENT | LAYER THICKNESS (nm) | MAIN COMPONENT | LAYER THICKNESS (nm) | MAIN COMPONENT | LAYER THICKNESS (nm) |
| | FIRST LAYER | $SiO_2$ | 20.0 | $SiO_2$ | 20.0 | $SiO_2$ | 13.1 | $SiO_2$ | 27.7 |
| | SECOND LAYER | $TiO_2$ | 8.3 | $TiO_2$ ※ | 8.3 | $TiO_2$ ※ | 6.7 | $ZrO_2$ | 13.1 |
| | THIRD LAYER | $SiO_2$ | 57.7 | $SiO_2$ | 58.0 | $SiO_2$ | 51.6 | $SiO_2$ | 62.4 |
| | FOURTH LAYER | $TiO_2$ | 7.9 | $ZrO_2$ | 12.9 | $ZrO_2$ | 11.7 | $ZrO_2$ | 10.4 |
| | FIFTH LAYER | $SiO_2$ | 213.0 | $SiO_2$ | 216.5 | $SiO_2$ | 207.2 | $SiO_2$ | 217.2 |
| | SIXTH LAYER | $TiO_2$ ※ | 20.3 | $ZrO_2$ | 37.9 | $ZrO_2$ | 36.9 | $ZrO_2$ | 35.8 |
| | SEVENTH LAYER | $SiO_2$ | 30.2 | $SiO_2$ | 31.5 | $SiO_2$ | 19.6 | $SiO_2$ | 21.9 |
| | EIGHTH LAYER | $ZrO_2$ | 48.4 | $TiO_2$ | 25.0 | $ZrO_2$ | 51.6 | $ZrO_2$ | 50.0 |
| | NINTH LAYER | $SiO_2$ | 98.9 | $SiO_2$ | 101.6 | $SiO_2$ | 94.3 | $SiO_2$ | 95.9 |
| TOTAL THICKNESS (nm) | | 504.8 | | 511.8 | | 492.6 | | 534.4 | |
| $SiO_2$ TOTAL THICKNESS (nm) | | 419.9 | | 427.6 | | 385.8 | | 425.1 | |
| $ZrO_2$ TOTAL THICKNESS (nm) | | 48.4 | | 50.9 | | 100.2 | | 109.4 | |
| $TiO_2$ TOTAL THICKNESS (nm) | | 36.5 | | 33.3 | | 6.7 | | 0 | |
| ANTIFOULING LAYER | | FLUORO THIN FILM | | FLUORO THIN FILM | | FLUORO THIN FILM | | FLUORO THIN FILM | |

## FIG.11

FIG.12A

FIG.12B

| | BAYER TEST VALUE VR | BAYER RATIO (BAYER VALUE (NORMALIZED)) VRN |
|---|---|---|
| EXAMPLE 1 | 6.96 | 1.58 |
| EXAMPLE 2 | 7.26 | 1.65 |
| EXAMPLE 3 | 6.88 | 1.56 |
| EXAMPLE 4 | 6.63 | 1.51 |
| EXAMPLE 5 | 6.29 | 1.43 |
| COMPARATIVE EXAMPLE 1 | 4.41 | 1.00 |
| COMPARATIVE EXAMPLE 2 | 5.37 | 1.22 |
| COMPARATIVE EXAMPLE 3 | 5.21 | 1.18 |

## FIG.13

FIG.14

FIG.15

EP 2 466 340 A1

| | EXAMPLE 1 | EXAMPLE 2 | EXAMPLE 3 | EXAMPLE 4 | EXAMPLE 5 | COMPARATIVE EXAMPLE 1 | COMPARATIVE EXAMPLE 2 | COMPARATIVE EXAMPLE 3 |
|---|---|---|---|---|---|---|---|---|
| LAYER CONFIGURATION | 7 LAYERS | | | | | | | |
| LOCATION OF $TiO_2$ LAYER | LAYER 4 | LAYER 6 | LAYERS 2, 4 | LAYERS 2, 6 | LAYERS 4, 6 | NONE | LAYER 2 | ALL LAYERS (LAYERS 2, 4, 6) |
| $TiO_2$ TOTAL THICKNESS T2T (nm) | 19.1 | 26.1 | 24.6 | 29.6 | 44.7 | 0 | 5.0 | 56.1 |
| PROPORTION P OF $TiO_2$ THICKNESS IN HIGH-REFRACTIVE-INDEX LAYERS ($TiO_2$ TOTAL THICKNESS T2T/ ($TiO_2$ TOTAL THICKNESS + $ZrO_2$ TOTAL THICKNESS TT)) | 26.1 % | 34.4 % | 35.0 % | 45.5 % | 82.3 % | 0 % | 5.6 % | 100 % |
| 1. SCRATCH RESISTANCE BAYER RATIO VRN | 1.6 | 1.7 | 1.6 | 1.5 | 1.4 | 1 | 1.2 | 1.2 |
| 2. UV DETERIORATION RESISTANCE UV-A (315-380 nm) TRANSMITTANCE | GOOD 46.3 % | GOOD 42.4 % | GOOD 44.4 % | GOOD 41.8 % | EXCELLENT 26.8 % | POOR 67.4 % | POOR 64.9 % | EXCELLENT 22.1 % |
| 3. ANTIREFLECTIVITY MEAN REFLECTANCE AT 400-700 nm | EXCELLENT 0.49 % | EXCELLENT 0.49 % | EXCELLENT 0.48 % | EXCELLENT 0.48 % | GOOD 0.71 % | EXCELLENT 0.48 % | EXCELLENT 0.47 % | GOOD 0.58 % |
| 4. HEAT RESISTANCE STRESS (MPa) | GOOD -100.9 | GOOD -98.8 | GOOD -100.8 | GOOD -103.1 | GOOD -108.8 | ACCEPTABLE -97.6 | ACCEPTABLE -96.3 | GOOD -107.3 |
| 5. WATER RESISTANCE | EXCELLENT | EXCELLENT | EXCELLENT | GOOD | GOOD | EXCELLENT | EXCELLENT | POOR |
| 6. PREVENTABILITY OF UV-INDUCED HC DISCOLORATION | EXCELLENT | EXCELLENT | EXCELLENT | GOOD | GOOD | EXCELLENT | EXCELLENT | POOR |
| 7. ADAPTIVITY TO STATIC CHARGE PREVENTION | GOOD | GOOD | GOOD | GOOD | GOOD | POOR | GOOD | GOOD |

FIG.16

| | EXAMPLE 6 | EXAMPLE 7 | COMPARATIVE EXAMPLE 4 | COMPARATIVE EXAMPLE 5 |
|---|---|---|---|---|
| LAYER CONFIGURATION | 5 LAYERS | | | |
| LOCATION OF $TiO_2$ LAYER | LAYER 4 | LAYER 2 | NONE | ALL LAYERS (LAYERS 2, 4) |
| $TiO_2$ TOTAL THICKNESS (nm) | 22.1 | 17.4 | 0 | 41.5 |
| PROPORTION OF $TiO_2$ THICKNESS IN HIGH-REFRACTIVE-INDEX LAYERS ($TiO_2$ TOTAL THICKNESS/ ($TiO_2$ TOTAL THICKNESS + $ZrO_2$ TOTAL THICKNESS)) | 40.6 % | 30.0 % | 0 % | 100 % |
| 2. UV DETERIORATION RESISTANCE UV-A (315-380 nm) TRANSMITTANCE | GOOD 57.7 % | GOOD 59.3 % | POOR 84.5 % | EXCELLENT 36.8 % |
| 3. ANTIREFLECTIVITY MEAN REFLECTANCE AT 400-700 nm | GOOD 0.66 % | GOOD 0.66 % | GOOD 0.67 % | GOOD 0.66 % |
| 4. HEAT RESISTANCE STRESS (MPa) | GOOD -102.3 | GOOD -99.8 | POOR -90.9 | GOOD -109.4 |
| 5. WATER RESISTANCE | EXCELLENT | EXCELLENT | EXCELLENT | GOOD |
| 6. PREVENTABILITY OF UV-INDUCED HC DISCOLORATION | EXCELLENT | EXCELLENT | EXCELLENT | GOOD |
| 7. ADAPTIVITY TO STATIC CHARGE PREVENTION | GOOD | GOOD | POOR | GOOD |

FIG.17

|  | EXAMPLE 8 | EXAMPLE 9 | COMPARATIVE EXAMPLE 6 | COMPARATIVE EXAMPLE 7 |
|---|---|---|---|---|
| LAYER CONFIGURATION | 9 LAYERS | | | |
| LOCATION OF $TiO_2$ LAYER | LAYERS 2, 4, 6 | LAYERS 2, 8 | LAYER 2 | NONE |
| $TiO_2$ TOTAL THICKNESS (nm) | 36.5 | 33.3 | 6.7 | 0 |
| PROPORTION OF $TiO_2$ THICKNESS IN HIGH-REFRACTIVE-INDEX LAYERS ($TiO_2$ TOTAL THICKNESS/ ($TiO_2$ TOTAL THICKNESS + $ZrO_2$ TOTAL THICKNESS)) | 43.0 % | 39.6 % | 6.3 % | 0 % |
| 2. UV DETERIORATION RESISTANCE UV-A (315-380 nm) TRANSMITTANCE | EXCELLENT 36.5 % | EXCELLENT 38.3 % | POOR 67.1 % | POOR 67.3 % |
| 3. ANTIREFLECTIVITY MEAN REFLECTANCE AT 400-700 nm | EXCELLENT 0.47 % | EXCELLENT 0.47 % | EXCELLENT 0.46 % | EXCELLENT 0.47 % |
| 4. HEAT RESISTANCE STRESS (MPa) | GOOD -99.1 | GOOD -100.1 | POOR -89.4 | POOR -92.5 |
| 5. WATER RESISTANCE | GOOD | GOOD | EXCELLENT | EXCELLENT |
| 6. PREVENTABILITY OF UV-INDUCED HC DISCOLORATION | GOOD | GOOD | EXCELLENT | EXCELLENT |
| 7. ADAPTIVITY TO STATIC CHARGE PREVENTION | GOOD | GOOD | GOOD | POOR |

FIG.18

FIG. 19

FIG.20

| | STRESS (Mpa) |
|---|---|
| $SiO_2$ LAYER | -138.8 |
| $ZrO_2$ LAYER | 87.7 |
| $TiO_2$ LAYER | 110.2 |

FIG.21

FIG.22

| O / Ti | COLOR |
|--------|-------|
| 1.9995 | YELLOW |
| 1.9900 | PALE YELLOW |
| 1.9867 | SILVER GRAY |
| 1.9847 | PALE GRAY |
| 1.9843 | BLUISH GRAY |
| 1.9832 | BLUISH BLACK |

FIG.23

FIG.24

| | Europäisches Patentamt European Patent Office Office européen des brevets | **EUROPEAN SEARCH REPORT** | **Application Number** EP 11 19 3225 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/001011 A2 (ESSILOR INT [FR]; SIRJEAN JEAN-LOUIS [FR]; THOMAS MICHELE [FR]) 3 January 2008 (2008-01-03) * page 1, lines 24-25 * * page 2, lines 18-22 * * page 4, line 2 * * page 8, lines 12-14 * * page 10, lines 1-2, 20-21 * * page 16, line 4 * * page 21 * ----- | 1-11 | INV. G02B1/11 |
| A | US 4 609 267 A (DEGUCHI HIROKAZU [JP] ET AL) 2 September 1986 (1986-09-02) * figure 3 * * column 5, line 63 - column 6, line 46 * ----- | 1-11 | |
| A | EP 1 845 392 A1 (ASAHI GLASS CO LTD [JP]) 17 October 2007 (2007-10-17) * paragraph [0103] * ----- | 1-11 | |
| A | WO 01/55752 A1 (SOLA INT HOLDINGS [AU]; MARECHAL NADINE GENEVIEVE [AU]; BLACKER RICHAR) 2 August 2001 (2001-08-02) * page 3; table 16 * * page 19; table 4 * ----- | 1-11 | TECHNICAL FIELDS SEARCHED (IPC) G02B |

The present search report has been drawn up for all claims

| Place of search | Date of completion of the search | Examiner |
|---|---|---|
| The Hague | 18 January 2012 | Serbin, Jesper |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 11 19 3225

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2012

| Patent document cited in search report | | | Publication date | Patent family member(s) | | | Publication date |
|---|---|---|---|---|---|---|---|
| WO 2008001011 | A2 | | 03-01-2008 | AU | 2007264771 | A1 | 03-01-2008 |
| | | | | CA | 2656492 | A1 | 03-01-2008 |
| | | | | CN | 101512390 | A | 19-08-2009 |
| | | | | EP | 2033021 | A2 | 11-03-2009 |
| | | | | FR | 2903197 | A1 | 04-01-2008 |
| | | | | JP | 2009541810 | A | 26-11-2009 |
| | | | | KR | 20090025277 | A | 10-03-2009 |
| | | | | WO | 2008001011 | A2 | 03-01-2008 |
| US 4609267 | A | | 02-09-1986 | NONE | | | |
| EP 1845392 | A1 | | 17-10-2007 | CN | 101111783 | A | 23-01-2008 |
| | | | | EP | 1845392 | A1 | 17-10-2007 |
| | | | | US | 2007279750 | A1 | 06-12-2007 |
| | | | | WO | 2006080502 | A1 | 03-08-2006 |
| WO 0155752 | A1 | | 02-08-2001 | AU | 781979 | B2 | 23-06-2005 |
| | | | | AU | 2493801 | A | 07-08-2001 |
| | | | | CA | 2396799 | A1 | 02-08-2001 |
| | | | | EP | 1269223 | A1 | 02-01-2003 |
| | | | | MX | PA02007162 | A | 22-09-2003 |
| | | | | US | 2003179343 | A1 | 25-09-2003 |
| | | | | WO | 0155752 | A1 | 02-08-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009042278 A

- JP 2009217018 A